# EUROPEAN PATENT APPLICATION

(11) **EP 4 116 743 A1**
(43) Date of publication of application: **11.01.2023**
(21) Application number: 22161398.7
(22) Date of filing: 10.03.2022
(51) Int. Cl.: G01T 1/178

(54) **SYSTEM AND METHOD FOR CONTROLLING A CONCENTRATION VARIATION OF A RADIOACTIVE CHEMICAL ELEMENT WITHIN A CALIBRATION CHAMBER**

(30) Priority: 11.03.2021 IT 202100005807; 11.03.2021 IT 202100005804
(71) Applicant: Niton S.r.l., 20089 Rozzano Milano (IT); Troiano, Gianluca, 21040 Uboldo Varese (IT); Hosseini, Seyed Reza, 20154 Milano (IT)
(72) Inventor: TROIANO, Gianluca, 21040 Uboldo (IT); HOSSEINI, Seyed Reza, 20154 Milano (IT)
(74) Representative: Savini, Stefania

(57) **Abstract**

There are disclosed a control method and a control system (10; 100; 1000) arranged for controlling a diminution of concentration of a radioactive chemical element, such as radon, during, or at the end, of a calibration test of a measuring device (8) for measuring a concentration of said radioactive chemical element, said control system (10; 100; 1000) comprising:
- a calibration chamber (2) arranged for housing the measuring device (8) to be calibrated, the calibration chamber (2) being provided with at least one evacuation passage (23) for the passage of an operating fluid comprising the radioactive chemical element to be disposed of exiting from the calibration chamber (2);
- a pump (P3) arranged for generating and controlling a flow of the operating fluid exiting from the calibration chamber (2);
- an evacuation chamber (18) arranged outside the calibration chamber (2), and in fluid communication therewith, to receive the operating fluid flow exiting from the calibration chamber (2);
- flow adjusting means (17, U) arranged for adjusting a flow rate of the operating fluid exiting from the calibration chamber (2) and entering the evacuation chamber (18), the flow adjusting means (17, U) being configured to adjust a flow rate of the operating fluid entering the evacuation chamber (18) and coming from the calibration chamber (2), so that a concentration value of the radioactive chemical element decreases inside the calibration chamber (2);
- conduit means (30000, 300000) for the circulation of the operating fluid entering and/or exiting from the evacuation chamber (18);
- a discharge circuit (C6) configured to release the operating fluid flow from the evacuation chamber (18) to the outer environment, the discharge circuit (C6) comprising further conduit means (300000) for the circulation of the operating fluid towards the outer environment outside the evacuation chamber (18), and two pumps (P4, P5), respectively for generating and controlling an operating fluid flow coming from the evacuation chamber (18), to be disposed of into the atmosphere, and for generating and controlling an air flow coming from the outer environment, which is added to the operating fluid flow coming from the evacuation chamber (18) so as to dilute the concentration of the radioactive material of the operating fluid flow coming from the evacuation chamber (18).

## Description

### State of the Art

The invention relates to a system and a method for controlling a concentration variation of a radioactive chemical element, in particular of radon, e.g., radon-222 or radon-220, also called Thoron, within a calibration chamber, in the course or at the end, of a calibration test of a device for measuring the concentration of the radioactive chemical element arranged inside the calibration chamber. More specifically, the system and method are designed to control a reduction in the concentration of the chemical element inside the calibration chamber.

The average activity concentration of radon-222 is obtained by means of radon-222 detectors, by air sampling conducted over a given time interval, which may typically range from few minutes to more than 12 months, based on the type of device and on the aim of the measure. Radon-222 detectors measuring the average activity concentration over short time intervals (typically 1 hour) are called CRMs (CRM standing for Continuous Radon Monitor) and allow monitoring of the variations and fluctuations in the activity concentration of radon-222 within an environment over time. Radon-222 detectors measuring the average activity concentration over long time intervals (typically more than 2 months) allow determining the risks related to long-term exposures.

The calibration of radon-222 detectors requires that they are in such a condition that samplings may be performed of air characterized by a known radon-222 activity concentration value. This calibration test is carried out within a controlled environment, that is, the calibration chamber, also referred to as "radon chamber", or STAR, after the English acronym for "System for Test Atmospheres with Radon".

Conventionally, a CRM calibration test is carried out by creating an atmosphere having the desired radon-222 activity concentration value, inside the calibration chamber, and by keeping this value as stable as possible over time, so as to observe any fluctuations in the measurements performed by the device undergoing calibration, and to characterize the latter, also in terms of uncertainty, in relation to that radon-222 activity concentration value.

In fact, however, radon-222 concentration may feature significant fluctuations over short periods of time, these not being taken into account in long-term averaged values. By contrast, the knowledge of the average values obtained over short time intervals helps to better understand radon-222 concentration trends in buildings, and to enhance reclamation strategies. As a result, response time determination is one of the tests provided for CRM calibration and characterization; it is thus required that radon-222 activity concentration be controllable and variable inside the radon-222 chamber, according to comparable time-scales.

Hereinbelow are described systems and methods of a known type, for controlling a radon-222 concentration variation within a calibration chamber that, however, do not allow a simple and quick controlled variation of radon-222 concentration within a calibration chamber.

A working implementation of a control system and the operating modes of the calibration chamber provided in the control system determine whether the radon-222 concentration maybe varied during a calibration test, and the way of varying the radon-222 concentration inside the calibration chamber, so far as the operating mode of the calibration chamber allows a variation of the radon-222 concentration. These operating modes of the calibration chamber may be classified in "static" operating mode and "dynamic" operating mode.

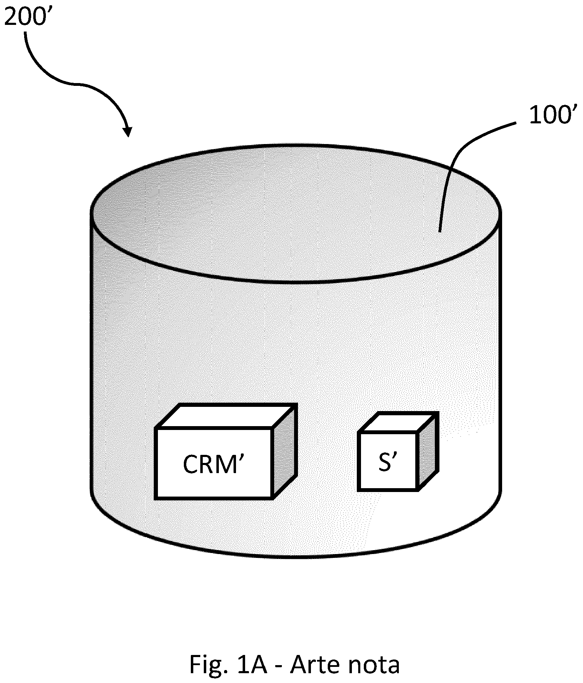

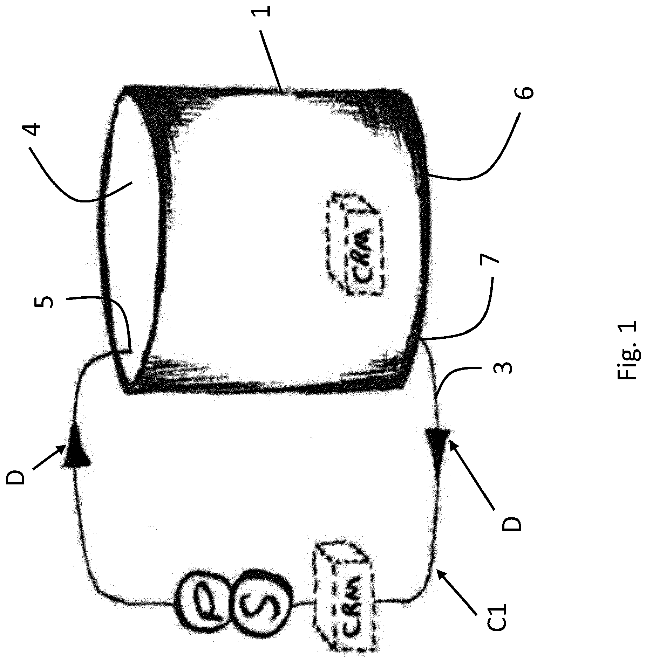

Referring to Figure 1A, the static operating mode envisages a control system 200' provided with a calibration chamber 100' arranged for housing a passive-type radon-222 source S', and a device CRM' for measuring the radon-222 concentration, in need of calibration.

A drawback of the static operating mode is that variation of radon-222 concentration inside the calibration chamber 100' is not allowed during a calibration test, as radon-222 concentration is only determined by the passive emission of the radon-222 source. As a result, the radon-222 concentration that may be reached inside the calibration chamber 100' is fixed and determined by the activity of the radon-222 source S' as well as by the volume of the calibration chamber 100'.

By contrast, dynamic operating modes allow varying the radon-222 concentration inside the calibration chamber. Yet, this variation is slow and difficult to control.

Control systems comprising a calibration chamber having a dynamic operating mode envisage the presence of a radon-222 source of active type, that is, passed through by a fluid flow, specifically air, arranged outside the calibration chamber, and of two circuits for varying radon-222 concentration inside the calibration chamber: a first supply circuit arranged for supplying air rich in radon-222 coming from the radon-222 source, to the calibration chamber, and a second evacuation circuit arranged, by contrast, for evacuating the calibration chamber at the end, and/or in the course, of the calibration test.

A calibration chamber operating in a dynamic operating mode may feature three different configurations: continuous flow, with feedback system and pulsed mode.

In order to assess the ability of varying radon-222 concentration inside the calibration chamber during the calibration test, the following working parameters characterizing the dynamic operating modes of a calibration chamber will be examined hereinbelow for each of the aforementioned configurations:
- Initial waiting time: time required for the radon-222 concentration inside the calibration chamber to reach a given value needed prior to the beginning of the calibration test;
- Increment: rapid increase in the radon-222 concentration inside the calibration chamber in order to reach a given value needed during a calibration test;
- Decrease and evacuation: rapid diminution in the radon-222 concentration inside the calibration chamber in order to reach a given value needed during a calibration test, or in order to evacuate the calibration chamber at the end of a calibration test, so as to set up the calibration chamber for the execution of a new calibration test;
- Compensation: compensation of the radon-222 naturally decayed inside the calibration chamber during a calibration test.

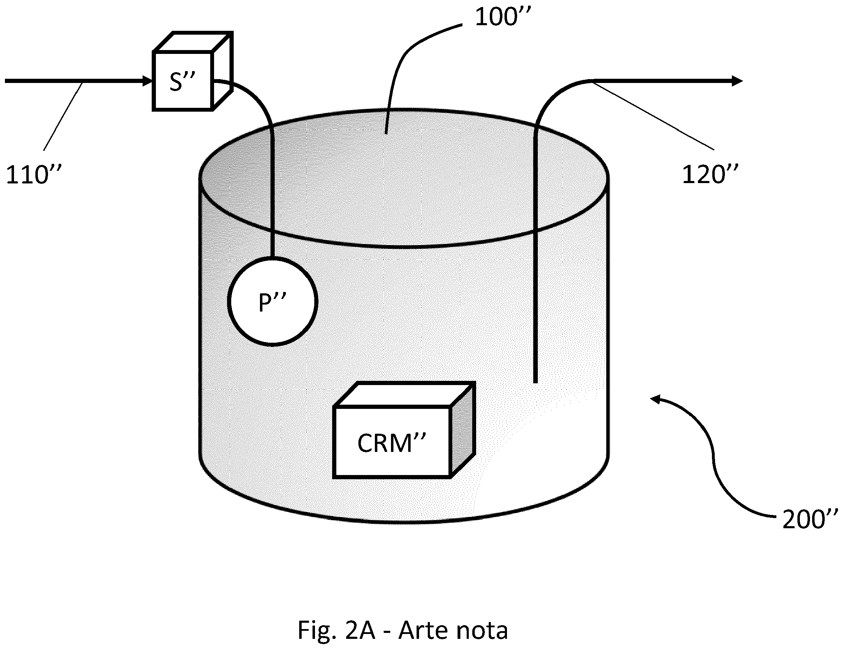

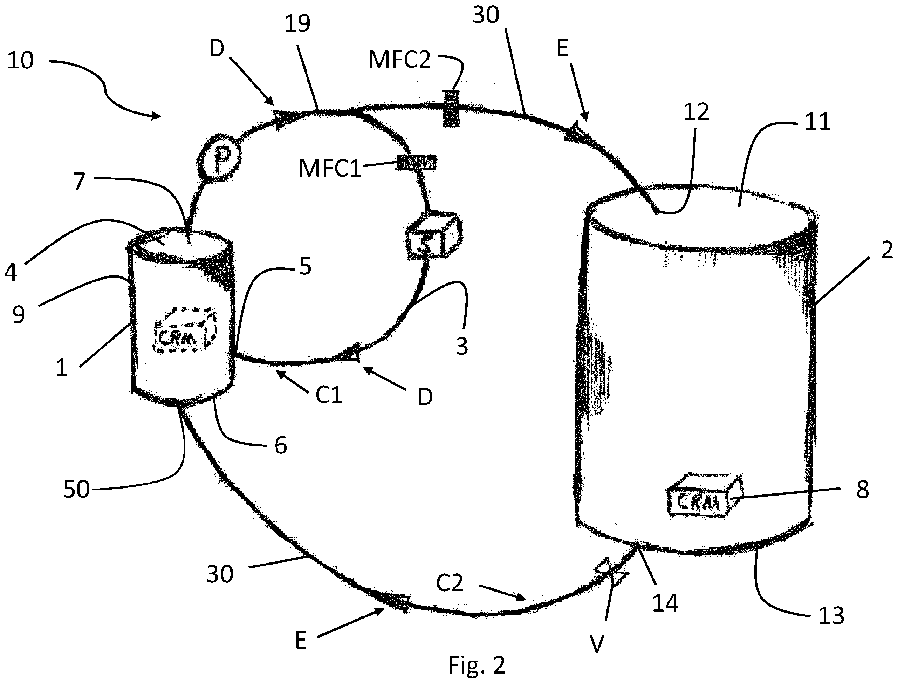

Referring to Figure 2A, a control system 200" includes a calibration chamber 100" having a dynamic operating mode in continuous flow configuration, a radon-222 source S", a supply circuit 110" for continuously supplying, when activated, a fluid flow passing through the radon-222 source S", and thus comprising air rich in radon-222, to the calibration chamber 100", and an evacuation circuit 120" for continuously releasing, when activated, a fluid flow comprising air, radon-222 and radon-222's decay products from the calibration chamber 100" to the external environment, both being operated by a single pump P". The radon-222 concentration inside the calibration chamber 100" depends on the flow rate of fluid entering the calibration chamber 100" and coming from the supply circuit 110" as well as on the volume of the calibration chamber 100": the reachable radon-222 concentration diminishes as the flow rate increases, and vice versa.

This configuration requires a rather long initial waiting time to bring the radon-222 concentration to a value needed to execute the calibration test. This initial waiting time depends on the volume of the calibration chamber 100" and on the flow rate of the fluid entering the calibration chamber 100", and during the calibration test it is required that the calibration chamber 100" is not opened and that the fluid flow rate is kept constant. This initial waiting time shall be added to the duration of each calibration test, which begins only at the end of the initial waiting time, this keeping the calibration chamber 100" occupied for a longer time than the time needed to execute the calibration test.

Moreover, a drawback of this continuous flow configuration is that it allows no rapid increase and/or decrease of the radon-222 concentration inside the calibration chamber 100". The flow rate of the fluid passing through the radon-222 sources currently available on the market is limited to a maximum of 10 liters/minute. Under this configuration, an additional increase in flow rate would not result in a significant radon-222 concentration diminution inside the calibration chamber 100". Thus, only a very slow increase and/or decrease of this concentration is possible. Furthermore, another drawback of the continuous flow configuration is that the radon-222 concentration generated by the radon-222 source S" requires prompt use thereof, and its use cannot be scheduled or postponed.

A rapid diminution of the radon-222 concentration inside the calibration chamber 100" during the calibration test is limited as the concentration of radioactive material in air to be reintroduced into the atmosphere in the evacuation step is subject to specific limits imposed by the law. As a result, in order to be able to perform a new calibration test it will be necessary to wait for a rather long period of time.

Finally, the compensation of the radon-222 naturally decayed may be achieved as a result of the fluid flow continuously flowing through the radon-222 source S" to the calibration chamber 100", and supplying to the latter the amount of radon-222 needed to restore the decayed one. In this case too, however, the compensation is slow and not controllable.

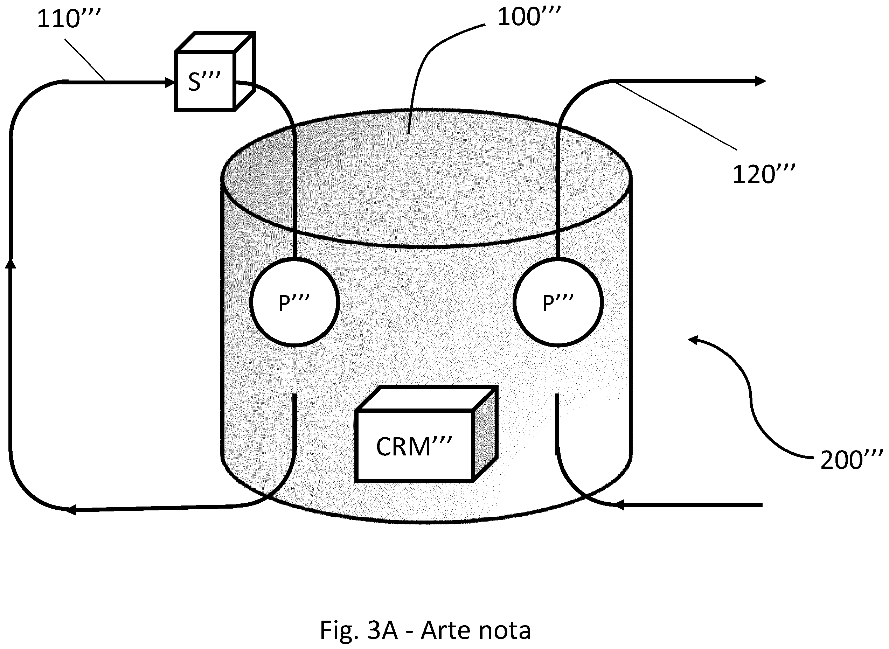

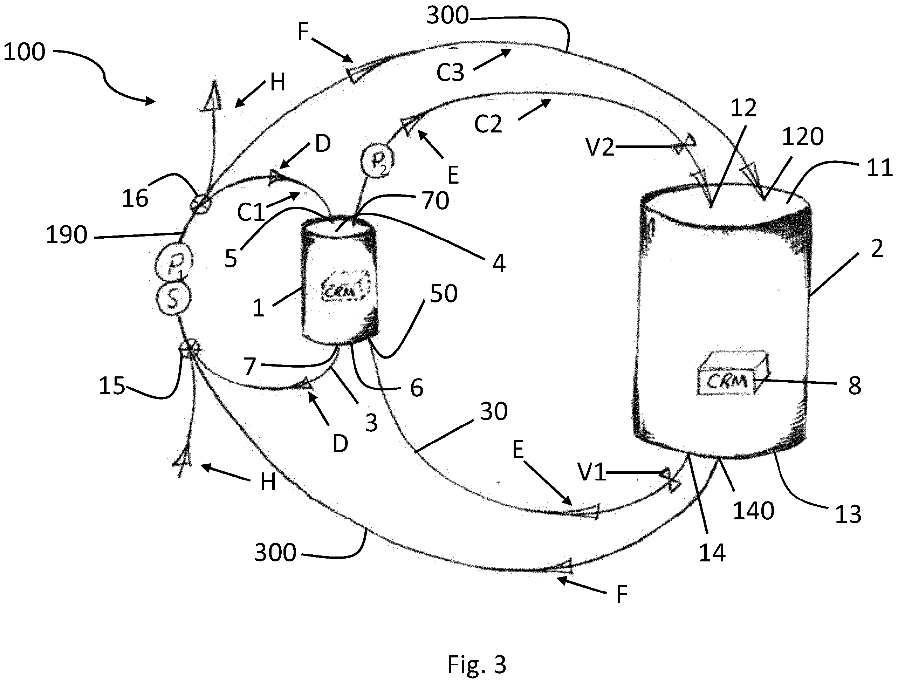

Referring to Figure 3A, a control system 200‴ includes a calibration chamber 100‴ having a dynamic operating mode in the configuration with feedback system, a radon-222 source S‴, a closed supply circuit 110‴ for supplying, when activated, a fluid flow passing through the radon-222 source S‴, thus comprising air rich in radon-222, to the calibration chamber 100"', and an evacuation circuit 120‴ for releasing, when activated, a fluid flow comprising air, radon-222 and radon-222's decay products from the calibration chamber 100‴. Under this configuration, each of the two circuits 110"', 120‴ is operated by a respective pump P₁‴, P₂‴, and there is a control unit, not shown in the Figure, for opening the supply circuit 110"', in the event that the radon-222 concentration inside the calibration chamber 100‴ is below a certain predefined concentration range, or for opening the evacuation circuit 120‴, in the event that the radon-222 concentration inside the calibration chamber 100‴ is above a certain predefined concentration range.

The configuration with feedback system allows to have a limited initial waiting time only if the radon-222 source S'" is arranged in proximity to the calibration chamber 100‴. In use, the supply circuit 110‴ is closed, the concentration in the internal volume of the radon-222 source S‴, which is lower than the volume of the calibration chamber 100‴, continuously increases until it reaches a desired level. At this point, the calibration test may be initiated by forcing a fluid, specifically air, to pass through the radon-222 source S"'. However, the drawback of the configuration with feedback system is that the radon-222 concentration generated within the radon-222 source S'" requires prompt use thereof, and its use cannot be scheduled or postponed. Furthermore, since the internal volume of the radon-222 source S'" is reduced, inside the same it is necessary to reach high levels of radon-222 activity concentration in order to provide the calibration chamber, having a significantly greater volume, with the correct amount of radon-222, and this makes it difficult to control the adjustment of the air flow and of its dispensing time.

The supply circuit 110‴ can be opened also to increase radon-222 concentration during the calibration test. In this case too, however, the drawback is that the radon-222 emissions generated by the radon-222 source S'" shall be promptly used, and their use cannot be scheduled or postponed.

Similarly to the case of the continuous flow configuration, under the configuration with feedback system too, a rapid diminution of the radon-222 concentration inside the calibration chamber 100‴ during the calibration test is limited as the air concentration of radioactive material to be reintroduced into the atmosphere in the evacuation step is subject to specific limits imposed by the law. As a result, in order to be able to perform a new calibration test it will be necessary to wait for a rather long period of time.

A compensation of the radon-222 naturally decayed may be achieved only in case a continuous fluid flow is maintained both in the supply circuit 110‴ and in the evacuation circuit 120"', this implying the need for arranging a continuous radon-222 detector and a flow control unit (both not shown in the Figure) for each of the two circuits 110‴, 120‴.

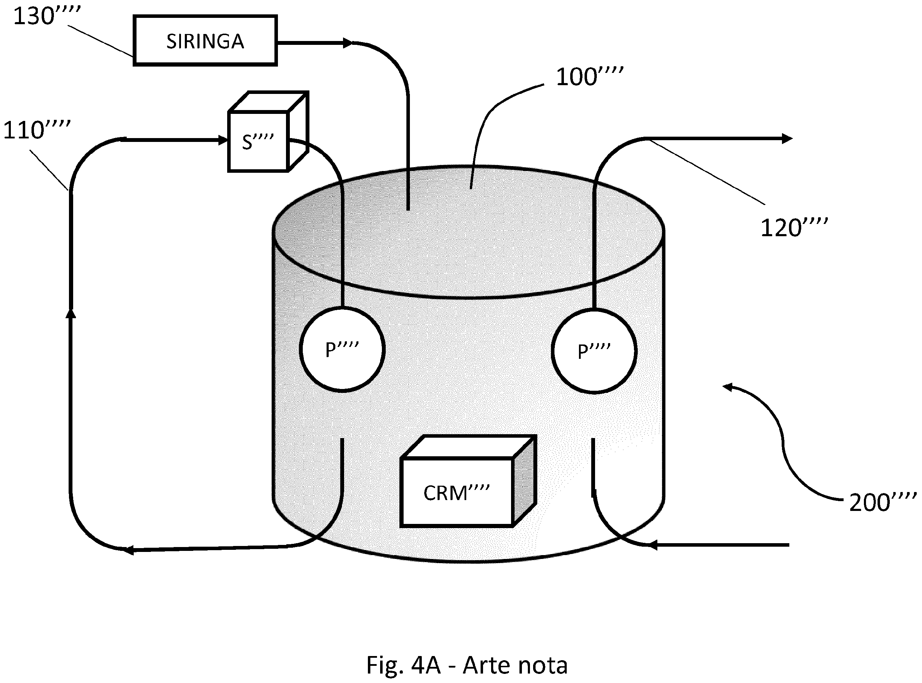

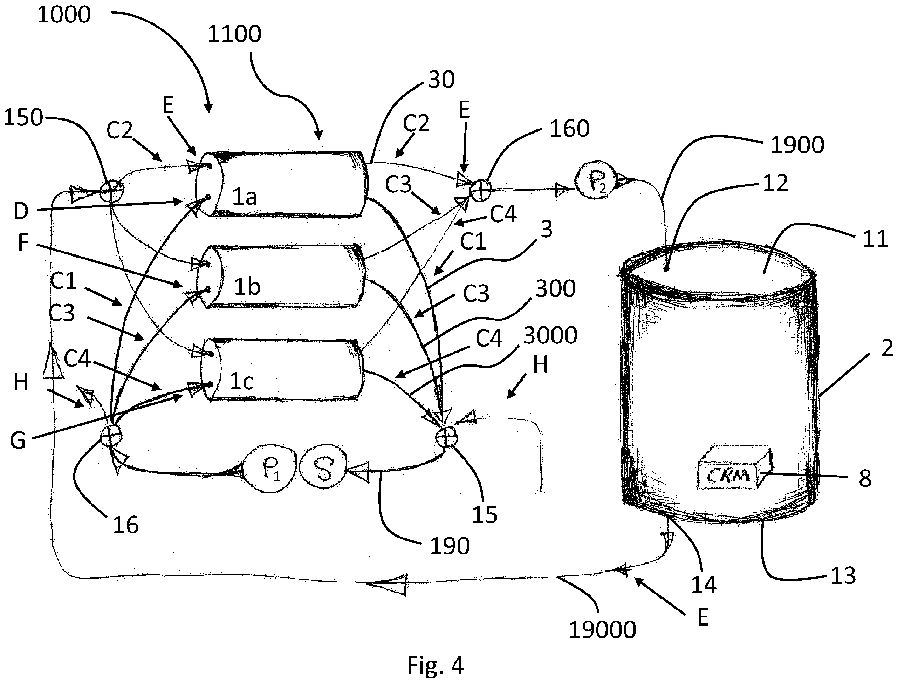

Referring to Figure 4A, a control system 200ʺʺ includes a calibration chamber 100ʺʺ having a dynamic operating mode in the pulsed mode configuration, which features higher flexibility, and yet greater complexity, than the two configurations previously described.

The control system 200ʺʺ further includes a supplying syringe 130ʺʺ that may be positioned in proximity to a radon-222 source, and for drawing a fluid sample comprising air rich in radon-222 from the radon-222 source S. A gamma radiation measuring device is provided to measure the radon-222 concentration inside the syringe 130"", and upon reaching a radon-222 concentration needed to perform a calibration test, the syringe 130"" is arranged in proximity to the calibration chamber 100"", such that the fluid contained therein is injected inside the calibration chamber 100ʺʺ and the radon-222 concentration is varied inside the calibration chamber 100"".

The control system 200ʺʺ may further include an additional radon-222 source S"", a closed supply circuit 110"" for supplying, when activated, a fluid flow passing through the radon-222 source S"", thus comprising air rich in radon-222, to the calibration chamber 100ʺʺ, and an evacuation circuit 120ʺʺ for releasing, when activated, a fluid flow comprising air, radon-222 and radon-222's decay products from the calibration chamber 100"". Under this configuration, each of the two circuits 110"", 120ʺʺ is operated by a respective pump P₁ʺʺ, P₂ʺʺ.

The closed supply circuit 110"", along which the additional radon-222 source Sʺʺ is located, allows to compensate the radon-222 naturally decayed inside the calibration chamber 100"".

Owing to the presence of the syringe 130"" which supplies radon-222 to the calibration chamber 100"", under this configuration, the control system 200ʺʺ envisages no initial waiting time, as the radon-222 concentration needed for the calibration test is reached outside the calibration chamber 100"", and does not occupy the same. The syringe 130"" also allows to increase the radon-222 concentration inside the calibration chamber 100"" during the calibration test. However, the drawback of the pulsed mode configuration is that it requires highly precise gamma emission measuring devices and dosing units, so as to inject correct volume doses inside the calibration chamber 100ʺʺ based on the concentration increment intended to be obtained.

In this case too, the evacuation circuit 120ʺʺ allows to reduce the radon-222 concentration inside the calibration chamber 100ʺʺ in a very gradual manner, as the concentration of radioactive material to be reintroduced into the atmosphere in the evacuation step is subject to specific limits imposed by the law, as previously mentioned. As a result, in this case too, in order to be able to perform a new calibration test it will be necessary to wait for a rather long period of time.

Given the complexity and/or inefficiency of the systems and methods for controlling a concentration variation of a radioactive chemical element within a calibration chamber of a known type before and during the execution of a calibration test for radon-222 detecting tools within the environment, there is a strong need for methods and/or systems which allow to overcome the drawbacks described above.

### Objects of the invention

An object of the invention is to improve the methods and systems of a known type for controlling a concentration variation, especially a diminution, of a radioactive chemical element within a calibration chamber.

Another object is to provide a method and a system for controlling a concentration variation of a radioactive chemical element within a calibration chamber, which allow to rapidly reduce the activity concentration of such radioactive chemical element within, and/or to rapidly evacuate, a calibration chamber, without violating the limits imposed by the law, which regulate the concentrations of radioactive material that can be introduced into the atmosphere.

### Brief description of the invention

According to the invention, there is provided a control system according to claim 1.

The control system is arranged for controlling a diminution of concentration of a radioactive chemical element, such as radon, in the course, or at the end, of a calibration test of a device for measuring a concentration of said radioactive chemical element, and includes:
- a calibration chamber arranged for housing the measuring device in need of calibration, the calibration chamber being provided with at least one evacuation passage for the passage of an operating fluid comprising the radioactive chemical element to be disposed of exiting from the calibration chamber;
- a pump arranged for generating and controlling a flow of said operating fluid exiting from the calibration chamber;
- an evacuation chamber arranged outside the calibration chamber, and in fluid communication therewith, to receive the operating fluid flow exiting from the calibration chamber;
- conduit means for the circulation of the operating fluid entering and/or exiting from the evacuation chamber.
The control system further includes flow adjusting means, arranged for adjusting a flow rate of the operating fluid exiting from the calibration chamber and entering the evacuation chamber, the flow adjusting means being interposed between the evacuation chamber and the calibration chamber along an operating fluid path from the calibration chamber to the evacuation chamber, and being configured to adjust a flow rate of the operating fluid entering the evacuation chamber and coming from the calibration chamber, so that a concentration value of the radioactive chemical element decreases inside the calibration chamber. The control system further includes a discharge circuit configured to release the operating fluid flow from the evacuation chamber to the outer environment, the discharge circuit comprising additional conduit means for the circulation of the operating fluid towards the outer environment outside the evacuation chamber, and two pumps, respectively for generating and controlling an operating fluid flow coming from the evacuation chamber, to be disposed of into the atmosphere, and for generating and controlling an air flow coming from the outer environment, intended to be added to the operating fluid flow coming from the evacuation chamber so as to dilute the concentration of radioactive material of the operating fluid flow coming from the evacuation chamber.

According to the invention, further, there is provided a control method according to claim 14.

Owing to the evacuation chamber according to the invention, provided in the system for controlling a concentration variation of a radioactive chemical element within a calibration chamber, one can reduce the duration of each calibration test and, in particular, the time to diminish and/or evacuate the calibration chamber. Indeed, in use, the evacuation chamber is placed in fluid communication with the calibration chamber and the radioactive chemical element emissions can be rapidly transferred to the evacuation chamber. This allows to rapidly decrease or zero the concentration of the radioactive chemical element inside the calibration chamber, as there is no need to observe any limits imposed by the law with regard to the emission of radioactive substances into the atmosphere.

In an example of a second aspect of the invention, a control system arranged for controlling a concentration variation of a radioactive chemical element, such as radon, during a calibration test of a device for measuring a concentration of the radioactive chemical element, includes a calibration chamber arranged for housing the measuring device in need of calibration and a collecting chamber, which can collect emissions of the radioactive chemical element that can be used to increase or decrease in a controlled manner the concentration of the radioactive chemical element inside the calibration chamber in fluid communication with the collecting chamber.

Hereinbelow are described some examples related to the second aspect of the invention.

### Example 1

In example 1, the control system arranged for controlling a concentration variation of a radioactive chemical element, such as radon, during a calibration test of a device for measuring a concentration of the radioactive chemical element, includes:
- a calibration chamber arranged for housing the measuring device in need of calibration, the calibration chamber being provided with at least one inlet passage and at least one outlet passage for the passage of an operating fluid entering said calibration chamber and exiting therefrom, respectively;
- a source of the radioactive chemical element arranged outside the calibration chamber;
- a pump arranged for generating and controlling an operating fluid flow incident on the source, and for obtaining an operating fluid flow exiting from the source, formed by the incident operating fluid flow and by decay products of the radioactive chemical element dragged by the incident operating fluid flow;
- conduit means for the circulation of the operating fluid;
- flow adjusting means arranged for adjusting a flow rate of the calibrating operating fluid entering and/or exiting from the calibrating chamber;
- a collecting chamber arranged for collecting the radioactive chemical element therein, the collecting chamber being arranged outside the calibration chamber and being in fluid connection with the radioactive chemical element source for receiving the operating fluid flow exiting from the source, so as to increase a concentration of the radioactive chemical element inside the same, and with the calibration chamber for supplying the calibration chamber with the operating fluid flow comprising the radioactive chemical element, so as to increase a concentration of the radioactive chemical element inside the calibration chamber, the flow adjusting means being interposed between the collecting chamber and the calibration chamber along an operating fluid path from the collecting chamber to the calibration chamber, and being configured for adjusting a flow rate of the operating fluid entering the calibration chamber and coming from the collecting chamber, so that a predefined value of the radioactive chemical element concentration is achieved inside the calibration chamber, which may vary during the calibration test.

### Example 2

Example 2 is a control system according to example 1, further comprising a collecting circuit arranged for allowing collecting the radioactive chemical element in the collecting chamber, the collecting circuit comprising first conduit means of the conduit means defining a path for the operating fluid flowing in the collecting circuit along a collecting direction, the pump and the source being fitted along the operating fluid path, the first conduit means comprising an end portion fitted to an inlet opening of the collecting chamber, for the passage of the operating fluid entering the collecting chamber, and an additional end portion fitted to an outlet opening, for the passage of the operating fluid exiting from the collecting chamber.

### Example 3

Example 3 is a control system according to example 2, wherein the collecting circuit further comprises a mass flow controller arranged along the operating fluid path in the collecting circuit, for detecting and controlling the flow rate of the operating fluid circulating in the collecting circuit.

### Example 4

Example 4 is a control system according to example 2 or 3, wherein the collecting circuit further comprises a first pair of switch devices comprising a first switch device and a second switch device, arranged for isolating a portion of the first conduit means comprising 1 radioactive chemical element source and the pump, and for allowing air free of radioactive chemical element from the outside to enter the portion, or air rich in radioactive chemical element to exit from the portion to the outside, to remove decay products from the portion.

### Example 5

Example 5 is a control system according to any of the examples from 2 to 4, further comprising a supply circuit arranged for placing the collecting chamber in fluid communication with the calibration chamber, and comprising second conduit means which defines an operating fluid path between the collecting chamber and the calibration chamber, for allowing the operating fluid flow coming from the collecting chamber to enter the calibration chamber, to vary a concentration of the radioactive chemical element inside the calibration chamber.

### Example 6

Example 6 is a control system according to example 5, wherein the supply circuit further comprises a second mass flow controller arranged for detecting and controlling the flow rate of the operating fluid circulating in the supply circuit, the second mass flow controller being arranged upstream of the calibration chamber, along the operating fluid path from the collecting chamber to the calibration chamber.

### Example 7

Example 7 is a control system according to any of the examples from 4 to 6, further comprising a compensation circuit, arranged for connecting the calibration chamber to the portion, the compensation circuit comprising third conduit means that defines an operating fluid path, and being configured for allowing the operating fluid to enter and exit from the calibration chamber, and from the portion of the first conduit means, the compensation circuit being configured for compensating the concentration of the radioactive chemical element naturally decayed in the calibration chamber.

### Example 8

Example 8 is a control system according to any of the examples from 4 to 7, further comprising an increment circuit, arranged for generating and circulating, through fourth conduit means, the operating fluid entering and exiting from the calibration chamber, to increase the concentration of the radioactive chemical element in thecalibration chamber.

### Example 9

Example 9 is a control system according to example 8, wherein the portion is shared by the collecting circuit and by the compensation circuit as well as by the increment circuit.

### Example 10

Example 10 is a control system according to any of the examples from 7 to 9, further comprising a plurality of collecting chambers, each collecting chamber of the plurality of collecting chambers being arranged for collecting therein decay products of the radioactive chemical element, a first collecting chamber being arranged along the operating fluid path in the collecting circuit and in the supply circuit, a second collecting chamber being arranged along the operating fluid path in the compensating circuit, and a third collecting chamber being arranged along the operating fluid path in the increment circuit.

### Example 11

Example 11 is a control system according to any of the examples from 8 to 10, further comprising a second pump arranged for conveying the operating fluid flow rich in decay products of the radioactive chemical element in the calibration chamber, the second pump being fitted to a second connecting portion of the conduit means, shared by the supply circuit and the compensation circuit as well as by the increment circuit.

### Example 12

Example 12 is a control system according to example 10 or 11, further comprising a second pair of switch devices arranged for allowing the operating fluid flow to enter and/or exit from only one collecting chamber of the plurality of collecting chambers, depending on the step being executed in the control system.

### Example 13

Example 13 is a control system according to any of the preceding examples, further comprising an evacuation chamber arranged outside, and in fluid connection with, the calibration chamber, to receive the operating fluid flow exiting from the calibration chamber, and flow adjusting means arranged for adjusting a flow rate of the operating fluid exiting from the calibration chamber and entering the evacuation chamber, the flow adjusting means being interposed between the evacuation chamber and the calibration chamber along an operating fluid path from the calibration chamber to the evacuation chamber, and configured for adjusting a flow rate of the operating fluid entering the evacuation chamber and coming from the calibration chamber, so that a concentration value of the radioactive chemical element decreases inside the calibration chamber.

### Example 14

Example 14 is an additional example of the second aspect of the invention, which provides a method for controlling a concentration variation of a radioactive chemical element, such as radon, during a calibration test of a device for measuring the radioactive chemical element, the control method being implementable in a control system according to any of the previous examples, and comprising the steps of:
- providing a calibration chamber arranged for housing the measuring device in need of calibration, the calibration chamber being provided with at least one inlet passage and at least one outlet passage for the passage of an operating fluid entering said calibration chamber and exiting therefrom, respectively;
- driving a pump arranged for generating and controlling an operating fluid flow incident on a source of the radioactive chemical element arranged outside the calibration chamber, and for obtaining an operating fluid flow exiting from the source, formed by the incident operating fluid flow and by decay products of the radioactive chemical element dragged by the incident operating fluid flow;

- collecting decay products of the radioactive chemical element in a collecting chamber of the control system, whereby collecting comprises supplying the operating fluid flow exiting from the source to the collecting chamber, so as to collect the decay products of the radioactive chemical element in the collecting chamber until a desired concentration of the radioactive chemical element inside the collecting chamber is obtained;
- supplying the calibration chamber with the operating fluid flow coming from the collecting chamber, said supplying comprising providing an initial step of collecting the radioactive chemical element in the calibration chamber until a concentration value of the radioactive chemical element is achieved inside the calibration chamber, which is needed prior to the beginning of the calibration test;
- adjusting, by means of flow adjusting means interposed between the collecting chamber and the calibration chamber along a path of the calibrating operating fluid, from the collecting chamber to the calibration chamber, a flow rate of the operating fluid entering the calibration chamber and coming from the collecting chamber, so that a predefined value of the radioactive chemical element concentration is achieved inside the calibration chamber.

### Example 15

Example 15 is a control method according to example 14, wherein said collecting comprises driving the flow adjusting means such that the operating fluid circulates only in a collecting circuit of the control system and in the collecting chamber, in order to increase the concentration of the radioactive chemical element inside the collecting chamber until the desired concentration of radioactive chemical element is reached inside the collecting chamber.

### Example 16

Example 16 is a control method according to example 15, wherein said supplying of the calibrating chamber comprises, after the desired concentration of the radioactive chemical element inside the collecting chamber has been reached, driving the flow adjusting means, such that the operating fluid also circulates in a supply circuit of the control system and in the calibration chamber, in order to increase the concentration of the radioactive chemical element inside the calibration chamber until the desired concentration of radioactive chemical element is reached inside the calibration chamber.

### Example 17

Example 17 is a control method according to example 16, wherein said supplying of the calibration chamber with the operating fluid flow coming from the collecting chamber further comprises, after the desired concentration of the radioactive chemical element inside the calibration chamber has been reached, driving the flow adjusting means such that the calibration chamber is isolated from the remaining parts of the control system, in order to be able to start the calibration test.

### Example 18

Example 18 is a control method according to example 17, wherein said supplying of the calibration chamber with the operating fluid flow coming from the collecting chamber further comprises, after a calibration test has been started, continuing the supplying of operating fluid flow to the calibration chamber to increase or compensate the concentration of radioactive chemical element inside the calibration chamber.

### Example 19

Example 19 is a control method according to any of the examples from 14 to 18, further comprising a step of cleaning the inner volumes of the pump, the radioactive chemical element source, and a connecting portion of first conduit means of the control system, the cleaning step comprising taking cleaning fluid from the outer environment to the control system through a first switch device of the control system, passing the cleaning fluid through the portion, expelling the cleaning fluid to the outside by means of the second switch device, the cleaning fluid in its path within the portion dragging any emissions from the radioactive chemical element source.

Owing to the collecting chamber that may be provided in the system for controlling a concentration variation of a radioactive chemical element within a calibration chamber, one can collect the emissions of a radioactive chemical element that can be used to increase or decrease in a controlled way the concentrationof the radioactive chemical element inside the calibration chamber which is in fluid communication with the collecting chamber.

As a result, the initial waiting time needed for the execution of a calibration test may be substantially eliminated, as the collecting chamber and the calibration chamber work separately.

The emissions collected in the collecting chamber may be used in a scheduled manner during the execution of a calibration test. As a result, the concentration of the radioactive chemical element concentration inside the calibration chamber may be rapidly increased at any time, by drawing from the reservoir containing the radioactive chemical element emissions collected in the collecting chamber.

This further allows reducing the duration of the calibration test, since the amount of time to achieve an increase in the concentration of the chemical element inside the calibration chamber during a calibration test is reduced.

### Brief description of the drawings

The invention can be better understood and implemented with reference to the attached drawings which illustrate several some non-limiting exemplary embodiments, in which:
Figure 1A is a schematic view of a control system of a known type, arranged in a in static operating mode;
Figure 2A is a schematic view of a control system of a known type, arranged in a dynamic operating mode in a continuous flow configuration;
Figure 3A is a schematic view of a control system of a known type, arranged in a dynamic operating mode in a configuration with feedback system;
Figure 4A is a schematic view of a control system of a known type, arranged in a dynamic operating mode in a pulsed mode configuration;
Figure 1 is a schematic view of a collecting chamber provided in a control system arranged for controlling a concentration variation of a radioactive chemical element inside the calibration chamber;
Figure 2 is a schematic view of a first embodiment of a control system comprising the collecting chamber of Figure 1;
Figure 3 is a schematic view of a second embodiment of a control system comprising the collecting chamber of Figure 1;
Figure 4 is a schematic view of a third embodiment of a control system comprising the collecting chamber of Figure 1;

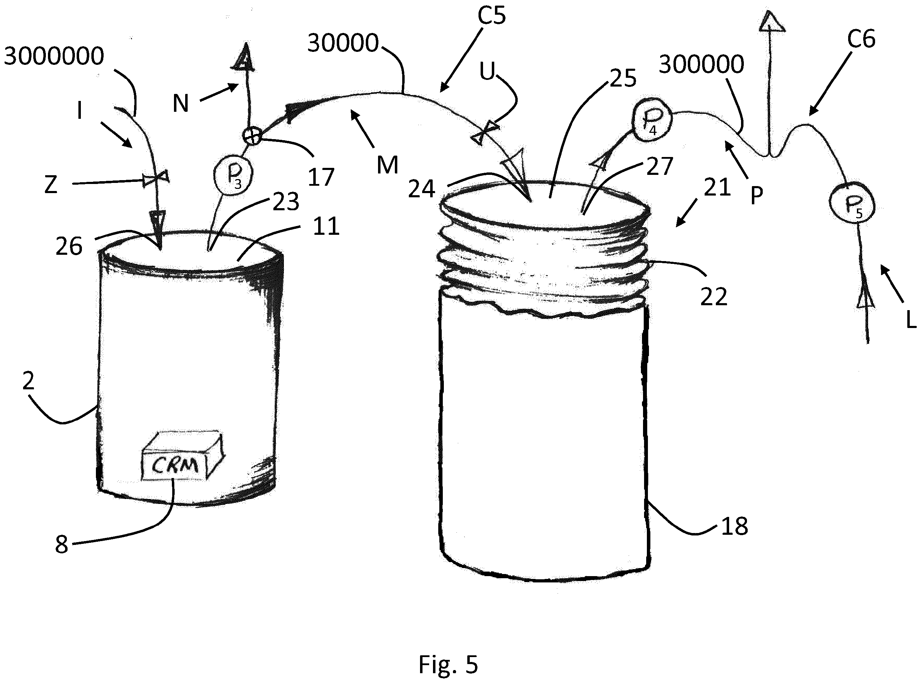

Figure 5 is a schematic view of an evacuation chamber inserted in a control system according to the invention.

### Detailed description of the invention

Throughout the several embodiments described in detail hereinbelow, the same reference numbers refer to parts or elements that are identical or similar in terms of structure and/or function.

Referring to Figure 1, there is illustrated a collecting chamber 1 that may be inserted in a control system for controlling a concentration variation of a radioactive chemical element within a calibration chamber provided in the control system.

Indeed, the collecting chamber 1 is adapted to collect emissions of the radioactive chemical element, which may be used for controlled varying, specifically increasing, of the radioactive chemical element concentration inside the calibration chamber, especially during a calibration test of a device for measuring the concentration of a radioactive chemical element, this measuring device being arranged inside the calibration chamber during the calibration test. During the calibration test, the average value of the chemical element concentration found in the radon chamber in a certain time interval, as determined by mathematical calculations or measured by a measuring device already calibrated, is compared with the average concentration value as detected by the measuring device in need of calibration, in the same time interval. The differences between the values of several measurements performed by the measuring device in need of calibration and the average concentration value found inside the radon chamber, allow determining both the deviation and the measurement uncertainty of the measuring device in need of calibration. The calibration test may be performed on several points of measurement, corresponding to the different values of the average activity concentration of radon, found in the radon chamber.

In particular, the radioactive chemical element is radon, for example radon-222 or radon-220; yet, the control system according to the invention may be used to control the concentration variation of other chemical radioactive elements, as well.

The collecting chamber 1 comprises a plurality of walls delimiting a closed space. In Figure 1, the collecting chamber 1 is schematically shown as having a substantially cylindrical shape. Of course, the collecting chamber 1 may have any other shape, e.g., a parallelepiped shape.

The collecting chamber 1 can be connected to a collecting circuit C1 arranged for generating and circulating an operating fluid flow entering and exiting from the collecting chamber 1. In particular, the operating fluid may comprise air together with the radioactive chemical element, as better explained in the following description.

The collecting circuit C1 comprises conduit means 3, schematically shown by solid, curvilinear line in Figure 1, of a known type, and thus not described in detail here, which define a path for the operating fluid, and are configured to allow the operating fluid to enter and exit from the collecting chamber 1. In use, this operating fluid can flow inside the conduit means 3 in a collecting direction D indicated by arrows in Figure 1.

On a wall of the collecting chamber 1, e.g., a first wall 4, there is formed an inlet opening 5, schematically shown with a point, to which an end portion of the conduit means 3 is fitted to allow the operating fluid to flow into the collecting chamber 1, that is, to pass from the collecting circuit C1 to the collecting chamber 1 following the collecting direction D. On a wall of the collecting chamber 1, e.g., a second wall, such as a bottom wall 6 or a side wall 9, there is formed an outlet opening 7, schematically shown with a point in Figure 1, to which an additional end portion of the conduit means 3 is fitted, to allow the operating fluid to exit from the collecting chamber 1, that is, to pass from the collecting chamber 1 to the collecting circuit C1 following the collecting direction D.

The collecting circuit C1 further comprises a source S of a radioactive chemical element, e.g., radon-222 or radon-220, schematically shown with a circle in the Figures, arranged along the operating fluid path. The source S is comprised of the radioactive chemical element radium-226, which is in a solid state. When radium-226 decays, it turns into radon-222, which is in a gaseous state, and thus is released from the matrix in which it is sealed, that is, from the source S of Radium-226, and therefore is available for being transported by the operating fluid.

The collecting circuit C1 further comprises a pump P, also schematically shown with a circle in the Figures, arranged for generating and controlling an operating fluid flow intended to be incident on the radioactive chemical element source S along its path according to the collecting direction D, to drag with it the radioactive chemical element. In this way, downstream of the source S there is obtained an operating fluid flow exiting from the source S, formed by the incident operating fluid flow and by the radioactive chemical element dragged by the incident operating fluid flow.

The conduit means 3 defines an operating fluid path, especially between the collecting chamber 1 and the source S. In particular, this path is closed.

The pump P may be arranged downstream of the source S, along the operating fluid path, in the collecting direction D.

In use, once the pump P has been activated, the operating fluid is generated and flown to the collecting circuit C1 which, after having passed through the source S, drags with it the radioactive chemical element and brings it to the collecting chamber 1 into which the conduit means 3 end.
A previously calibrated device CRM for measuring the concentration of a radioactive chemical element (e.g., radon-222 or radon-220) may be provided inside the collecting circuit C1, for example upstream of the source S, along the operating fluid path in the collecting direction D, and/or inside the collecting chamber 1. In this way, it is possible to measure and monitor the concentration variation of the radioactive chemical element inside the collecting circuit C1 and/or the collecting chamber 1. As an alternative to the direct measurement performed through the measuring device CRM, the radioactive chemical element concentration may be calculated theoretically and at any time, by knowing some parameters, including the activity of the radioactive chemical element source S and the volume of the collecting chamber 1. For a theoretical calculation of the activity concentration of the radioactive chemical element, the collecting circuit C1 is to remain closed, and it is necessary to know the concentration at an initial time T0 as well as the time elapsed from the initial time T0.

As long as the assembly formed by collecting chamber 1 and collecting circuit C1 remains closed, that is, the operating fluid cannot be released from the aforesaid assembly, the concentration of the chemical element inside the collecting chamber 1 (and inside the conduit means 3) is bound to increase over time, until it reaches an equilibrium value that depends on both the activity of the source and the volume of the collecting chamber 1.

Once the concentration value of the radioactive chemical element has reached a predefined value needed for performing a calibration test or for increasing the concentration of the radioactive chemical element in the course of a calibration test, the collecting chamber 1 may be placed in fluid communication with the calibration chamber within which the calibration test will be performed, as explained more in detail in the following description.

The collecting chamber 1 acts as reservoir of radioactive chemical element emissions. The volume of the collecting chamber 1 is such that a partial amount of radioactive chemical element collected in the collecting chamber 1 can be taken by means of a standard-type mass flow controller, without requiring a precise dosing system, as in the case of using the supplying syringe 130"" provided in the control system 200ʺʺ belonging to the state of the art.

Furthermore, since the collecting chamber 1 works separately from the calibration chamber, the concentration inside the same can increase without interfering with the normal operation of the calibration chamber.

The radioactive chemical element concentration in the collecting chamber 1 can be calculated theoretically and at any time, by knowing the activity of the source S and the volume of the collecting chamber 1, or can be measured directly by means of the measuring device CRM, and there is no need for measuring the gamma activity by means of a gamma radiation detector, as in the case of using the supplying syringe 130"" provided in the control system 200ʺʺ belonging to the state of the art.

The radioactive chemical element emissions collected in the collecting chamber 1 can be used at any time, even during a calibration test. As such, the radioactive chemical element concentration inside the calibration chamber does not require to be promptly used, and its use can be scheduled or postponed with respect to the time of its collection.

A control system 10 comprises a collecting chamber and a collecting circuit, such as the ones described above, and can take several implementing configurations, depending on whether a mass amount of radioactive chemical element exchanged between the collecting chamber and the calibration chamber, within which the calibration test is to be performed, is fixed or variable.

A first embodiment of the control system 10 is shown in Figure 2. In the first embodiment, the control system 10 comprises a collecting chamber 1, similar to the one illustrated in Figure 1, therefore its description will not be repeated hereinbelow, and a calibration chamber 2 configured to be placed in fluid connection with the collecting chamber 1 and intended to house a measuring device in need of calibration 8.

In this first embodiment, the control system 10 is configured such that the collecting chamber 1 exchanges a predefined amount of operating fluid, that is, a predefined amount of air mass having a known radioactive chemical element concentration, with the calibration chamber 2.

The calibration chamber 2 comprises a plurality of walls delimiting a closed space. In Figure 2, the calibration chamber 2 is schematically shown as having a substantially cylindrical shape. Of course, the calibration chamber 2 may have any other shape, e.g., a parallelepiped shape.

The volume size of the calibration chamber 2 is larger than the volume of the collecting chamber 1.

The control system 10 comprises a collecting circuit C1, similar to the one illustrated in Figure 1, therefore its description will not be repeated hereinbelow, arranged for generating and circulating an operating fluid entering and exiting from the collecting chamber 1. In particular, the operating fluid may comprise air and the radioactive chemical element.

The control system 10 comprises conduit means provided with first conduit means 3, similar to the conduit means 3 described with reference to Figure 1, a source S of radioactive chemical material arranged outside the calibration chamber 2, and a pump P for generating and controlling an operating fluid flow rich in radioactive chemical element, similar to the ones shown in Figure 1, therefore their descriptions will not be repeated hereinbelow.

A device CRM for measuring the concentration of a radioactive chemical element (e.g., radon-222 or radon-220), in particular a previously calibrated one, may be provided inside the collecting circuit C1, for example upstream of the source S, along the operating fluid path in the collecting direction D, and/or inside the collecting chamber 1, so as to detect and monitor the concentration variation of the radioactive chemical element inside the collecting circuit C1 and/or the collecting chamber 1.

The collecting circuit C1 further comprises a first mass flow controller MFC1 arranged along the operating fluid path for detecting and controlling the flow rate of such operating fluid circulating in the collecting circuit C1. In particular, the first mass flow controller MFC1 can control the opening or closing of the collecting circuit C1, that is, the flowing, or the interruption, respectively, of the operating fluid flow, inside the components of the collecting circuit C1.

The control system 10 further comprises a supply circuit C2 provided for placing the collecting chamber 1 in fluid connection with the calibration chamber 2, within which the calibration test is performed, thus supplying the calibration chamber 2 with operating fluid comprising radioactive chemical element emissions.

The supply circuit C2 comprises second conduit means 30, provided in the conduit means of the control system 10, schematically shown by solid, curvilinear line in Figure 2, of a known type, and thus not described in detail here, which define a path for the operating fluid, between the collecting chamber 1 and the calibration chamber 2. The second conduit means 30 is configured to allow the operating fluid to enter and exit from the calibration chamber 2, to enter the collecting chamber 1 and to exit from the collecting circuit C1. In use, this operating fluid can flow inside the supply circuit C2, in a supplying direction E indicated by arrows in Figure 2.

On a wall of the calibration chamber 2, e.g., a top wall 11, there is formed an inlet opening 12, schematically shown with a point in the Figures, to which a first end portion of the second conduit means 30 is fitted, to allow the operating fluid to flow into the calibration chamber 2, that is, to pass from the supply circuit C2 to the calibration chamber 2 following the supplying direction E.

On a wall of the calibration chamber 2, e.g., a bottom wall 13, there is formed an outlet opening 14, schematically shown with a point in Figure 2, to which an additional portion of the second conduit means 30 is fitted, to allow the operating fluid to exit from the calibration chamber 2, that is, to pass from the calibration chamber 2 to the supply circuit C2 following the supplying direction E.

On a wall of the collecting chamber 1, e.g., the bottom wall 6, there is formed a second inlet opening 50, schematically shown with a point in Figure 2, to which another additional end portion of the second conduit means 30 is fitted, to allow the operating fluid to flow into the collecting chamber 1, that is, to pass from the supply circuit C2 to the collecting chamber 1 following the supplying direction E.

The second conduit means 30 and the first conduit means 3 are configured to be placed in fluid communication, such that the operating fluid rich in emissions of the radioactive chemical element circulating in the collecting circuit C1 can flow into the supply circuit C2, too, thus supplying the calibration chamber 2. To this end, for example, a second end portion of the second conduit means 30 is connected with a bore provided in a connecting portion 19 of the first conduit means 3. This connecting portion 19 can be provided downstream of the pump P and upstream of the first mass flow controller MFC1.

The supply circuit C2 further comprises a second mass flow controller MFC2 arranged for detecting and controlling the flow rate of the operating fluid circulating in the supply circuit C2, in particular the flow rate of the operating fluid entering the calibration chamber 2. For example, the second mass flow controller MFC2 can control the flowing, or the interruption, of the operating fluid flow entering the calibration chamber 2.

The second mass flow controller MFC2 is arranged upstream of the calibration chamber 2, along the operating fluid path from the collecting chamber 1 to the calibration chamber 2.

The supply circuit C2 further comprises a valve element V arranged for detecting and controlling the flow rate of the operating fluid circulating in the supply circuit C2, in particular the flow rate of the operating fluid exiting from the calibration chamber 2. For example, the valve element V can control the flowing, or the interruption, of the operating fluid flow exiting from the calibration chamber 2.

For example, the valve element V can be a non-return valve.

The valve element V is arranged downstream of the calibration chamber 2, along the operating fluid path from the calibration chamber 2 to the collecting chamber 1.

The valve element V can be arranged in proximity to the outlet opening 14.

The mass flow controllers MFC1 and MFC2 and valve element V act as means for adjusting the operating fluid flow in the control system 10, as they adjust the operating fluid flow rate inside the circuits C1 and C2.

Hereinbelow is described the operation of a control system 10 according to the first embodiment, with reference to Figure 2.

Specifically, there is described the air mass exchange process between the collecting chamber 1 and the calibration chamber 2, in order to initiate a calibration test in the aforesaid calibration chamber 2, which defines an initial collection or supply step.

As previously described, the initiation of a calibration test inside the calibration chamber 2 requires that a predefined amount of operating fluid mass, that is, a predefined amount of air mass having a known concentration of a radioactive chemical element, e.g., radon-222 or radon-220, be collected inside the collecting chamber 1.

Initially, only the collecting circuit C1 is opened (i.e., the first mass flow controller MFC1 is placed in an opening configuration, in which the operating fluid can flow into the first conduit means 3, thus passing through the source S), and a continuous fluid flow is generated therein, in particular air containing the radioactive chemical element (i.e., emissions from the source S) by using the pump P. At the same time, the supply circuit C2 remains closed, i.e., the second flow controller MFC2 is placed in a closing configuration, in which the operating fluid is prevented from entering the calibration chamber 2, and the valve element V is also placed in a closing configuration, in which the operating fluid is prevented from exiting from the calibration chamber 2. The continuous air flow in the collecting circuit C1 generates a radioactive chemical element gas reserve inside the collecting chamber 1, this increasing over time. This process can continue regardless of what is happening inside the calibration chamber 2: it may be temporarily left unused prior to the execution of a new calibration test, or, in the meantime, it may accommodate a calibration test in progress, and yet without affecting the step of increasing the radioactive chemical element concentration in the collecting chamber 1.

Once the predefined value of the operating fluid mass for initiating a calibration test has been reached inside the collecting chamber 1, this containing a known concentration value of radioactive chemical element emissions, the supply circuit C2, too, is opened, i.e., the second flow controller MFC2 is placed in an opening configuration, in which the operating fluid is allowed to enter the calibration chamber 2, and the valve element V is also placed in an opening configuration, in which the operating fluid is allowed to exit from the calibration chamber 2. Thus, the operating fluid flow is allowed to circulate both in the collecting circuit C1 and in the supply circuit C2.

The value of the predefined amount of operating fluid mass required to be exchanged between the collecting chamber 1 and the calibration chamber 2 in order to meet the requirements for the execution of a calibration test in the calibration chamber 2, is calculated based on the radioactive chemical element concentration present in the collecting chamber 1, on the desired radioactive chemical element concentration sought inside the calibration chamber 2 and on the inner volumes of the collecting chamber 1 and of the calibration chamber 2. Having knowledge of the aforesaid variables, this value can be calculated at any time.

The simultaneous opening of the collecting circuit C1 and of the supply circuit C2 (which corresponds to the condition under which the operating fluid can flow between the collecting chamber 1 and the calibration chamber 2) can be set by properly driving the flow adjusting means in order to initiate a first calibration test, or in order to initiate a new calibration test, after the evacuation of radioactive chemical element from the calibration chamber 2, in case a calibration test had already been performed previously in the same.

The two mass flow controllers MFC1 and MFC2 detect, in particular in a continuous manner, that is, at given intervals, the value of the operating fluid mass entering each circuit C1, C2, whereas the opening of the valve element V exiting the calibration chamber 2 allows the operating fluid to circulate also in the portion of supply circuit C2 exiting the calibration chamber 2.

The increase in the radioactive chemical element concentration achievable inside the calibration chamber 2 can be set to be rapid or gradual, as required, by varying the operating fluid masses entering the collecting circuit C1 and the supply circuit C2.

In use, the increase in the value of the operating fluid mass circulating in the supply circuit C2 corresponds to an increase in the radioactive chemical element concentration inside the calibration chamber 2. The waiting time scales for reaching the predefined radioactive chemical element concentration inside the calibration chamber 2 range from several seconds to several tens of seconds.

Upon reaching the desired radioactive chemical element concentration inside the calibration chamber 2, said calibration chamber 2 is isolated from the remaining parts of the control system 10 by closing the supply circuit C2, i.e., the second flow controller MFC2 is placed in a closing configuration, in which the operating fluid is prevented from entering the calibration chamber 2, and the valve element V is also placed in a closing configuration, in which the operating fluid is prevented from exiting the calibration chamber 2. As a result, the calibration test can be immediately performed in the calibration chamber 2, without any additional initial waiting time, as the radioactive chemical element emissions can be collected in the collecting chamber 1 regardless of the operating condition of the calibration chamber 2. Indeed, during the execution of the calibration test inside the calibration chamber 2, operating fluid rich in said radioactive chemical element continues to flow in the assembly comprised of the collecting circuit C1 and the collecting chamber 1. As such, an amount of radioactive chemical element is collected once again in the collecting chamber 1, which can possibly be used in an increasing step designed for increasing the radioactive chemical element concentration in the calibration chamber 2 during the execution of the calibration test, or in a compensation step designed for compensating the amount of radioactive chemical element naturally decayed inside the calibration chamber 2 during the execution of the calibration test, or, still, for initiating a new subsequent calibration test without having to wait for an initial waiting time.

When both the collecting circuit C1 and the supply circuit C2 are open, an operating fluid mass is exchanged between the collecting chamber 1 and the calibration chamber 2. As a result, the radioactive chemical element concentration inside the two chambers 1, 2 varies in such a way that the radioactive chemical element concentration inside the collecting chamber 1 decreases, and the radioactive chemical element concentration inside the calibration chamber 2 increases. The value of operating fluid mass required to pass in the supply circuit C2 in order to reach the desired radioactive chemical element concentration inside the calibration chamber 2, needed for the calibration test, is calculated, for example, by solving a plurality of differential equations. These differential equations can be easily derived by the person skilled in the art by applying notions of fluid dynamics, and take into account both the operating fluid mass having a high concentration of radioactive chemical element, exiting from the collecting chamber 1, and the operating fluid mass having a low concentration of radioactive chemical element, exiting from the calibration chamber 2, and vice versa. In other words, differential equations provide knowledge both of the radioactive chemical element concentration inside the collecting chamber 1 and of the radioactive chemical element concentration inside the calibration chamber 2 at any time during the operating fluid exchange between the collecting chamber 1 and the calibration chamber 2.

This first embodiment of the control system 10 described above offers several significant advantages over the prior art previously described.

First of all, since the step of collecting the radioactive chemical element takes place inside the collecting chamber 1 without involving the calibration chamber 2, inside the collecting chamber 1 there is always an increasing amount of radioactive chemical element, which can be transferred to the calibration chamber 2 for the execution of a calibration test. As such, there is no need to add an initial waiting time in order to meet the concentration requirements for the radioactive chemical element needed to perform a calibration test inside the calibration chamber 2. The value of radioactive chemical element concentration required inside the calibration chamber 2 can be reached within few seconds.

Second of all, the mass of operating fluid rich in radioactive chemical element collected in the collecting chamber 1 can also be used to increase the radioactive chemical element concentration inside the calibration chamber 2 at any time during the execution of a calibration test. The required increase in the radioactive chemical element concentration inside the calibration chamber 2 can be achieved within few seconds.

Finally, the compensation of the radioactive chemical element naturally decayed inside the calibration chamber 2 is a process comparable to a reduced process for increasing the radioactive chemical element concentration inside the same chamber. Owing to the volume available in the collecting chamber 1, operating fluid mass exchanges between the collecting chamber 1 and the calibration chamber 2, to realize these reduced concentration increase processes, may be easily achieved through the standard-type mass flow controllers MFC1 and MFC2.

In Figure 3, a second embodiment of the control system is designated by reference number 100. Similarly to the control system 10, the control system 100 also comprises a collecting chamber 1, similar to the one illustrated in Figure 1, therefore its description will not be repeated hereinbelow, and conduit means for the circulation of the operating fluid. The control system 100 further comprises a calibration chamber 2 configured for being placed in fluid connection with the collecting chamber 1 and designed to house a measuring device in need of calibration 8. Said calibration chamber 2 is similar to the one described in the control system 10 of the first embodiment, therefore the description will focus only on several features that distinguish it from the previous one.

In this second embodiment, the control system 100 is configured in such a way that the collecting chamber 1 exchanges a fixed amount of operating fluid mass with the calibration chamber 2. As such, there is no need to control neither the value of operating fluid mass circulating in the control system 100 nor the flow rate of this operating fluid, and, as a result, the control system 100 does not need to be provided with flow controllers. In use, the collecting chamber 1 and the calibration chamber 2 of the control system 100 are designed to reach an equilibrium by means of a constant operating fluid flow, which is exchanged between the volumes of the two chambers 1, 2.

Similarly to the control system 10, the control system 100 too comprises a collecting circuit C1, similar to the one illustrated in Figure 1, therefore the description will focus only on several features that distinguish it from the previous one. This collecting circuit C1 is arranged for generating and circulating an operating fluid entering and exiting from the, collecting chamber 1.

In this second embodiment, the collecting circuit C1 comprises first conduit means 3, provided in the conduit means of the control system 100, a source S of radioactive chemical element, e.g., radon-222 or radon-220, arranged outside the calibration chamber 2, a first pump P1 placed downstream of said source S, and two switch devices, that is, a first switch device 15 and a second switch device 16, placed upstream the source S and downstream the first pump P1, respectively. If necessary, these switch devices 15, 16 are adapted to isolate a portion 190 of the first conduit means 3, comprising the radioactive chemical element source S and the pump P1, from the rest of the collecting circuit C1, or to allow air free of radioactive chemical element from the outside to enter said portion 190, or air rich in radioactive chemical element to exit therefrom.

Similarly to the control system 10, also the control system 100 according to the second embodiment can be provided with a previously calibrated device CRM for measuring the concentration of a radioactive chemical element (e.g., radon-222 or radon-220), inside the collecting circuit C1, for example upstream of the source S along the operating fluid path in the collecting direction D (not shown in Figure 3), and/or inside the collecting chamber 1, so as to detect and monitor the concentration variation of radioactive chemical element inside the collecting circuit C1 and/or the collecting chamber 1.

The control system 10 further comprises a supply circuit C2, similar to the one described in the first embodiment, therefore its description will not be repeated hereinbelow. This supply circuit C2 is provided with second conduit means 30, provided in the conduit means of the control system 100, designed for placing the collecting chamber 1 in fluid connection with the calibration chamber 2 within which the calibration test is performed, thus supplying the calibration chamber 2 with operating fluid comprising radioactive chemical element emissions. In use, this operating fluid can flow inside the supply circuit C2, in a supplying direction E indicated by arrows in Figure 3. The supply circuit C2 further comprises a second pump P2 arranged for conveying said flow of operating fluid rich in radioactive chemical element to the calibration chamber 2.

In this second embodiment of the control system 100, the supply circuit C2 further comprises two valve elements V1, V2, that is, a first valve element V1, similar to the valve element V of the control system 10, and a second valve element V2, placed downstream and upstream of the calibration chamber 2, respectively, for detecting and controlling the flow rate of operating fluid circulating in the supply circuit C2, in particular the flow rate of operating fluid entering and/or exiting from the calibration chamber 2. For example, the second valve element V2 can control the flowing, or the interruption, of the operating fluid flow entering the calibration chamber 2, whereas the first valve element V1 can control the flowing, or the interruption, of the operating fluid flow exiting from the calibration chamber 2.

For example, the first valve element V1 and the second valve element V2 can be non-return valves.

The control system 100 further comprises a compensation circuit C3, designed for connecting the calibration chamber 2 with the portion 190 of the first conduit means 3, by means of third conduit means 300, provided in the conduit means of the control system 100, in particular in proximity to the switch devices 15, 16. The third conduit means 300, schematically shown by solid, curvilinear line in Figure 3, of a known type and thus not described in detail here, define a path for the operating fluid and are configured to allow the operating fluid to enter and exit from the calibration chamber 2 as well as to enter and exit from the portion 190 of the first conduit means 3. In other words, in addition to what has been described above, the switch devices 15, 16 are also arranged and configured to allow opening and/or closing of the inlet and/or outlet of said operating fluid flow to/from said compensation circuit C3 when there is the need for compensating the radioactive chemical element naturally decayed inside the calibration chamber 2. In use, this operating fluid can flow inside the compensation circuit C3 in a compensating direction F indicated by arrows in Figure 3.

The switch devices 15, 16, the first valve element V1 and the second valve element V2 act as means for adjusting the operating fluid flow in the control system 100, as they adjust the operating fluid flow rate inside the circuits C1, C2 and C3.

On a wall of the calibration chamber 2, e.g., the top wall 11, in addition to the inlet passage 12, similar to that of the control system 10, there is formed a second inlet passage 120, schematically shown with a point in Figure 3, to which a portion of the third conduit means 300 is fitted, to allow the operating fluid to flow into the calibration chamber 2, that is, to pass from the compensation circuit C3 to the calibration chamber 2 following the compensating direction F.

On a wall of the calibration chamber 2, e.g., a bottom wall 13, in addition to the outlet passage 14, similar to that of the control system 10, there is formed a second outlet opening 140, schematically shown with a point in Figure 3, to which aportion of the third conduit means 300 is fitted, so as to allow the operating fluid to exit from the calibration chamber 2 and pass from the calibration chamber 2 to the compensation circuit C3 following the compensation direction F.

On a wall of the collecting chamber 1, e.g., the top wall 4, in addition to the inlet opening 5, similar to that of the control system 10, there is formed a second outlet opening 70, schematically shown with a point in Figure 3, to which a portion of the second conduit means 30 is fitted, so as to allow the operating fluid to exit from the collecting chamber 1 to circulate in the supply circuit C2 following the supplying direction E.

Hereinbelow is described the operation of a control system 100 according to the second embodiment, with reference to Figure 3.

Specifically, there is described the air mass exchange process between the collecting chamber 1 and the calibration chamber 2, in order to initiate a calibration test in the aforesaid calibration chamber 2, which defines an initial collection or supply step.

First of all, before proceeding with the step of collecting the radioactive chemical element inside the collecting chamber 1 in order to initiate a new calibration test, there may be provided a step of cleaning the inner volumes of the pump P1, the radioactive chemical element source S, and the connecting portion 190 of the first conduit means 3, comprised between the two switch devices 15, 16, from the operating fluid contained therein, possibly rich in radioactive chemical element, which may alter the subsequent calibration test. This cleaning step is performed by properly driving of both the switch devices 15 e 16 and the first pump P1. To this end, cleaning fluid is taken from the outer environment, in particular air, through the first switch device 15 and the driving of the first pump P1, and enters the portion 190 through the first switch device 15, is passed through the connecting portion 190 of the first conduit means 3 (properly isolated from the rest of the circuit C1 through the switch devices 15 and 16), and expelled to the outside through the second switch 16. The operating fluid can flow in the portion 190 along a cleaning direction H indicated by arrows in Figure 3. During its path inside the portion 190, the cleaning fluid drags with it any possible emissions from the radioactive chemical element source S.

After termination of the aforesaid cleaning step, there is provided the step of collecting radioactive chemical element inside the collecting circuit C1. To this end, the switch devices 15, 16 are set to allow a circulation of operating fluid flow inside the collecting circuit C1 set in a closed loop, that is, only inside the collecting circuit C1 and inside the collecting chamber 1. The first pump P1 is driven so as to allow establishing of a constant flow of operating fluid passing through the source S, until the radioactive chemical element concentration needed to perform a new calibration test inside the calibration chamber 2 is reached inside the collecting chamber 1. The time needed to reach the predefined radioactive chemical element concentration inside the collecting chamber 1 can be calculated by knowing both the activity of the radioactive chemical element contained in the source S and the volume of the collecting chamber 1 itself.

Since the volume of the collecting chamber 1 is smaller than that of the calibration chamber 2, the radioactive chemical element concentration to be reached inside the collecting chamber 1 shall have to be higher than the concentration of radioactive chemical element needed to subsequently perform the calibration test inside the calibration chamber 2. The difference between the two concentrations can be calculated by knowing the volume both of the collecting chamber 1 and of the calibration chamber 2.

The radioactive chemical element concentration inside the collecting chamber 1 can be calculated theoretically, that is, by mathematical calculations, at any time, by knowing the activity of the radioactive chemical element source S, the duration of the operating fluid flow, the decay constant of the radioactive chemical element and the volume of the collecting chamber 1. The radioactive chemical element concentration inside the collecting chamber 1 can also be obtained experimentally, by using a concentration measuring device CRM (previously calibrated), possibly provided inside the collecting chamber 1, or inside the collecting circuit C1.

Once the predefined radioactive chemical element concentration has been reached inside the collecting chamber 1, the operation of the control system 100 continues in two different ways, described below, depending on whether the calibration chamber 2 is ready to perform a new calibration test.

If the calibration chamber 2 is not immediately available for the execution of a new calibration test, the radioactive chemical element concentration reached inside the collecting chamber 1 has to be maintained substantially constant in order to be used later for performing a calibration test. For this reason, the switch devices 15, 16 are set to interrupt the operating fluid flow inside the collecting circuit C1 and to isolate the connecting portion 190 of the first conduit means 3 from the collecting chamber 1. The switch devices 15, 16 are set so that clean air can enter the connecting portion 190 of the first conduit means 3 from the outside, through the first switch device 15. Then, the air allowed entering this connecting portion 190 of the first conduit means 3 is immediately expelled to the outside, through the second switch device 16. In this way, the new radioactive chemical element emissions generated by the source S are eliminated, whereas the radioactive chemical element concentration inside the collecting chamber 1 remains constant, and is then ready to be used for performing a calibration test inside the calibration chamber 2.

By contrast, if the calibration chamber 2 is ready to perform a new calibration test, in this case too, the switch devices 15, 16 are set to interrupt the operating fluid flow inside the collecting circuit C1, whereas the second pump P2 is driven in the supply circuit C2, and the valves V1, V2 are opened. In this way, in the supply circuit C2 is established an operating fluid flow that transfers the radioactive chemical element concentration from the collecting chamber 1 to the calibration chamber 2. This process continues until an equilibrium between the collecting chamber 1 and the calibration chamber 2 is reached, thus reaching the radioactive chemical element concentration needed inside the calibration chamber 2 to perform a new calibration test.

After the initial collection step or supply step of the calibration chamber 2 has been completed, that is, when a radioactive chemical element concentration sufficient for performing a calibration test has been transferred into the calibration chamber 2, the second pump P2 is shut off, the supply circuit C2 is closed, i.e., no operating fluid circulates inside the second conduit means 30, by driving the two valve elements V1 ,V2 into a closing configuration, in which the operating fluid is prevented from exiting from and entering the calibration chamber 2, respectively, and the two switch devices 15, 16 are set in such a way that an operating fluid flow circulates again inside the collecting circuit C1. As such, it is again possible to increase the radioactive chemical element concentration inside the collecting chamber 1.

During a calibration test, the radioactive chemical element concentration inside the calibration chamber 2 shall have to be maintained substantially constant to properly calibrate the measuring device CRM in need of calibration 8. For this reason, there is provided a continuous compensation of the chemical element naturally decayed inside the calibration chamber 2. To this end, the connecting portion 190 of the first conduit means 3 is first subjected to a continuous cleaning under an air flow coming from the outside, as previously explained. Subsequently, the switch devices 15, 16 are set so as to allow passing of a flow of operating fluid, rich in radioactive chemical element, coming from the source S, either through the collecting circuit C1 or through the compensation circuit C3 depending on whether the compensation of the radioactive chemical element naturally decayed is to be provided inside the collecting chamber 1 or inside the calibration chamber 2.

The control system 100 according to the second embodiment offers several significant advantages as compared to the prior art previously described.

First of all, since the collecting chamber 1 and the collecting circuit C1 work separately from the calibration chamber 2, inside the collecting chamber 1 there is always an increasing amount of radioactive chemical element, which can be transferred to the calibration chamber 2 for the execution of a calibration test. As such, there is no need to add an initial waiting time in order to meet the concentration requirements for the radioactive chemical element needed to perform a calibration test inside the calibration chamber 2.

Second of all, the mass of operating fluid rich in radioactive chemical element collected in the collecting chamber 1 can be used to increase the radioactive chemical element concentration inside the calibration chamber 2 at any time, even in the case that a calibration test is already in progress to increase the radioactive chemical element concentration inside the calibration chamber 2.

Finally, as regards the compensation of the chemical element naturally decayed, in this second embodiment it can be performed both inside the calibration chamber 2 and inside the collecting chamber 1, since the source S can be isolated also from the collecting chamber 1 itself. The compensation of the radioactive chemical element naturally decayed inside the collecting chamber 1 can be performed by making a flow of operating fluid flow through the source S, the latter then being supplied to the collecting chamber 1 itself through the collecting circuit C1. Similarly, the compensation of the radioactive chemical element naturally decayed inside the calibration chamber 2 can be performed by making a flow of operating fluid flow through the source S, the latter then being supplied to the calibration chamber 2 itself through the compensation circuit C3. The time needed to let the operating fluid flow into the collecting circuit 1 and into the compensation circuit C3, and, as a result, to carry out the compensation through the collecting circuit C1 or through the compensation circuit C3, can be calculated by knowing the activity of the radioactive chemical element source S and the volume of either the collecting chamber 1 or the calibration chamber 2 as well as the radioactive chemical element concentration within either the collecting chamber 1 or the calibration chamber 2.In Figure 4, a third embodiment of the control system is represented by reference number 1000. Similarly to both the control system 10 and the control system 100, the control system 1000 also comprises conduit means for the circulation of the operating fluid, and a calibration chamber 2 configured to be placed in fluid connection, in this case, with a collecting assembly 1100, and designed to house a measuring device in need of calibration 8.

The control system 1000 differs from the two previously described ones in that it comprises a plurality of collecting chambers, for example three collecting chambers, each of them having a specific, dedicated function. Indeed, the control system 1000 comprises a first collecting chamber 1a arranged for performing the initial step of collecting the radioactive chemical element until reaching of the concentration needed to perform a calibration test inside the calibration chamber 2. The control system 1000 further comprises a second collecting chamber 1b arranged for performing the step of compensating the radioactive chemical element naturally decayed inside the calibration chamber 2 during a calibration test. The control system 1000 can further comprise a third collecting chamber 1c arranged for performing the step of increasing the radioactive chemical element concentration in case the radioactive chemical element concentration needs to be increased inside the calibration chamber 2. Each of these collecting chambers 1a, 1b, 1c is similar to the one described in the second embodiment and illustrated in Figure 3, therefore its description will be omitted hereinbelow. In this third embodiment too, the control system 1000 is configured in such a way that the collecting chambers 1a, 1b, 1c exchange fixed amounts of radioactive chemical element mass with the calibration chamber 2.

In this third embodiment too, the control system 1000 comprises a collecting circuit C1, arranged for generating and circulating, through first conduit means 3 provided in the conduit means of the control system 1000, an operating fluid entering and exiting from the collecting chamber 1 to perform the initial collection step. In use, this operating fluid can flow inside the collecting circuit C1, in a collecting direction D indicated by arrows in Figure 4.

Similarly to the control system 100 of the second embodiment, the control system 1000 further comprises a supply circuit C2 and a compensation circuit C3. Both are arranged for generating and circulating, through second conduit means 30 provided in the conduit means of the control system 1000, and through third conduit means 300 provided in the conduit means of the control system 1000, an operating fluid entering and exiting from the calibration chamber 2 and the second collecting chamber 1b, respectively, to perform the compensation step. In use, this operating fluid can flow inside the supply circuit C2, in a supplying direction E, and can flow inside the compensation circuit C3 in a compensating direction F, both indicated by arrows in Figure 4. Finally, an increment circuit C4 is provided, this being arranged for generating and circulating, through fourth conduit means 3000 provided in the conduit means of the control system 1000, an operating fluid entering and exiting from the third collecting chamber 1c to perform the increasing step. In use, this operating fluid can flow inside the increment circuit C4, in an increasing direction G indicated by arrows in Figure 4.

In this embodiment, the conduit means connecting portion 190 comprising the radioactive chemical element source S and the pump P1 is shared by the collecting circuit C1 and by the compensation circuit C3 as well as by the increment circuit C4.

The control system 1000 further comprises a second connecting portion 1900 of the conduit means, comprising the second pump P2, which is also shared by the supply circuit C2 and by the compensation circuit C3 as well as by the increment circuit C4.

Considering the plurality of collecting chambers 1a, 1b, 1c present, the control system 1000 comprises two pairs of switch devices that allow the adjusting of the operating fluid flow inside the components of the control system 1000, by allowing the operating fluid flow to be directed to the various parts of the control system 1000, depending on the step being performed. More specifically, a first pair of switches 15, 16, allows to isolate the conduit means connecting portion 190, comprising the radioactive chemical element source S and the first pump P1, from the rest of the collecting assembly 1100, and to place it in communication with the outer environment, in particular to perform the step of cleaning the second portion 190. The first pair of switches 15, 16 further allows to open and/or close the inlet and/or outlet of said operating fluid flow to/from the various collecting circuit C1, supply circuit C2, compensation circuit C3 and increment circuit C4, depending on the step being performed in the control system 1000. By contrast, a second pair of switch devices 150, 160 allows the operating fluid flow to enter and/or exit from only one of the three collecting chambers 1a, 1b, 1c, depending on the step being performed in the control system 1000.

A device CRM for measuring the concentration of a radioactive chemical element (e.g., radon-222 or radon-220), not shown in Figure 4, may be provided inside the collecting circuit C1, for example upstream of the source S, along the operating fluid path in the collecting direction D, and/or inside the collecting chamber 1, so as to detect and monitor the concentration variation of the radioactive chemical element inside the collecting circuit C1 and/or the collecting chamber 1.

On a wall of the calibration chamber 2, e.g., the top wall 11, there is formed the inlet passage 12, schematically shown with a point in the Figure, arranged for receiving an end of the second connecting portion 1900 of the second conduit means 30, and for allowing the operating fluid to flow into the calibration chamber 2, that is, to pass from one of the supply circuit C2, the compensation circuit C3 and the increment circuit C4, to the calibration chamber 2, following the supplying direction E or the compensating direction F, or the increasing direction G, respectively.

On a wall of the calibration chamber 2, e.g., the bottom wall 13, there is formed the outlet passage 14, schematically shown with a point in Figure 4.

The control system 1000 further comprises a third connecting portion 19000 of the conduit means arranged for connecting the outlet passage 14, to which an end of the third portion 19000 is fitted, with the switch device 150. The third portion 19000 allows the operating fluid to exit the calibration chamber 2, that is, to pass from the calibration chamber 2 to the supply circuit C2, or to pass from the calibration chamber 2 to the compensation circuit C3, or to pass from the calibration chamber 2 to the increment circuit C4, following the supplying direction E, the compensating direction F or the increasing direction G, respectively.

The switch devices 15, 16, 150 and 160, act as means for adjusting the operating fluid flow in the control system 1000, as they adjust the operating fluid flow rate inside the collecting circuit C1, the supply circuit C2, and the compensation circuit C3 as well as inside the increment circuit C4.

The operation of the control system 1000 is substantially the same as that of the control system 100, and yet, in addition, there is provided the use of a dedicated collecting chamber for the initial step (collecting chamber 1a), for the compensating step (collecting chamber 1b), and for the increasing step (collecting chamber 1c).

Referring to Figure 5, there is shown an evacuation chamber 18 according to the invention, which may be provided in the control system 10, 100, 1000, designed to control a concentration variation of a radioactive chemical element exiting the calibration chamber 2 prior to its introduction in the outer environment, and thus in the atmosphere. The aim of the evacuation chamber 18 is to let the operating fluid coming from the calibration chamber 2 flow thereinto, for example following the execution of a calibration test of a measuring device 8, in order to leave the calibration chamber 2 itself free, to perform a new calibration test, thus reducing the waiting times between a calibration test and the subsequent one.

Indeed, immediately upon termination of a calibration test, said operating fluid still has a high concentration of radioactive chemical element and of its decay products. However, the radioactive material concentration to be introduced into the atmosphere is subject to specific limits imposed by the law; more specifically, it must be lower than 1000 Bq/m³. As a result, the operating fluid cannot be entirely disposed of into the atmosphere. The presence of the evacuation chamber 18 in the control system 10, 100, 1000 allows storing the operating fluid into an environment other than the calibration chamber 2, thus leaving the calibration chamber 2 free for the immediate execution of a new calibration test without having to wait for any additional time.

The control system 10, 100, 1000 comprises conduit means for the circulation of the operating fluid entering and/or exiting the evacuation chamber 18.

This evacuation chamber 18 comprises an expandable part 21 that allows varying of the inner volume of the evacuation chamber 18 depending on the operating fluid to be disposed of, introduced in the evacuation chamber 18. In other words, the evacuation chamber 18 can be deformed owing to the expandable part 21.

The expandable part 21 can comprise a bellows-like sidewall portion 22 comprising wall folds that allow the inner volume of the evacuation chamber 18 to deform.

Figure 5 schematically shows the evacuation chamber 18 as a sort of inflatable balloon, having a substantially cylindrical shape when it is completely filled with the operating fluid coming from the calibration chamber 2. Of course, the evacuation chamber 18 can feature any other shape, for example a spherical shape. When the evacuation chamber 18 is completely filled with the operating fluid coming from the calibration chamber 2, its volume is at least equal to the volume of said calibration chamber 2, such that it can receive all the operating fluid of the calibration chamber 2.

The evacuation chamber 18 is arranged outside the calibration chamber 2 and is in fluid connection with the calibration chamber 2 through an evacuation circuit C5. Said evacuation circuit C5 comprises conduit means 30000 that defines an operating fluid path from the calibration chamber 2 to the evacuation chamber 18, and a pump P3 for generating and controlling an operating fluid flow rich in radioactive chemical element and its decay products, which can flow outside the calibration chamber 2, that is, it can flow from the calibration chamber 2 to the evacuation chamber 18.

An end of said conduit means 30000 is fitted to an evacuation passage 23 formed on a wall of the calibration chamber 2, e.g., the top wall 11, whereas an additional end of said conduit means 30000 is fitted to an inlet hole 24 formed on a wall of the evacuation chamber 18, e.g., the top wall 25. Owing to the evacuation passage 23, the operating fluid can flow from the calibration chamber 2 to the conduit means 30000, whereas owing to the inlet hole 24, the operating fluid can pass from the conduit means 30000 to the evacuation chamber 18.

The inlet hole 24 and the evacuation passage 23 are schematically shown with a point in Figure 5.

Downstream of the pump P3, the evacuation circuit C5 comprises an evacuation switch 17 that allows the operating fluid coming from the calibration chamber 2 to flow towards the evacuation chamber 18, along an evacuation direction M indicated by an arrow in Figure 5, or to the outer environment, along the exit direction N indicated by an arrow in Figure 5, if necessary.

The control system 10, 100, 1000 may provide a valve element Z, not shown in the previous Figures, to further allow adjusting the flow rate of air coming from the outer environment, towards the calibration chamber 2, this air being capable of flowing along an inlet direction I indicated by an arrow Figure 5 through a conduit 3000000, an end of which is fitted to a clean air passage 26 formed on a wall of the calibration chamber 2, e.g., the top wall 11. The clean air passage 26 is schematically shown with a point in Figure 5.

The evacuation circuit C5 further comprises an additional valve element U, arranged for adjusting the flow rate of the operating fluid circulating in the evacuation circuit C5, in particular the flow rate of the operating fluid exiting from the calibration chamber 2, towards the evacuation chamber 18. For example, the additional valve element U can control the flowing, or the interruption, of the operating fluid flow exiting from the calibration chamber 2 at the end of a calibration test of the measuring device in need of calibration 8.

The additional valve element U is arranged downstream of the calibration chamber 2, along the operating fluid path from the calibration chamber 2 to the evacuation chamber 18.

The control system 10, 100, 1000 may further comprise a discharge circuit C6 configured to allow the operating fluid to flow out of the evacuation chamber 18 towards the outer environment, after the radioactive emissions concentration contained in the operating fluid has decreased below the limits imposed by law for the disposal of radioactive material into the atmosphere, following a calibration test.

The discharge circuit C6 comprises further conduit means 300000 for the circulation of the operating fluid towards the outer environment outside the evacuation chamber 18, and two pumps P4, P5, respectively for generating and controlling an operating fluid flow coming from the evacuation chamber 18, through an outlet bore 27, which needs to be disposed of into the atmosphere and which can flow along an expelling direction P indicated by an arrow in Figure 5, and for generating and controlling an air flow coming from the outside, which can flow along an introducing direction L indicated by an arrow in Figure 5, which is added to the operating fluid flow coming from the evacuation chamber 18, in order to dilute the radioactive material concentration characterizing the operating fluid flow coming from the evacuation chamber 18, which needs to be disposed of into the atmosphere.

The outlet bore 27 is formed on a wall of the evacuation chamber 18, e.g., the top wall 25, and is schematically shown with a point in Figure 5.

The evacuation switch 17 and the additional valve element U act as flow adjusting means for the operating fluid, these being interposed between the evacuation chamber 18 and the calibration chamber 2, along the operating fluid path from the calibration chamber 2 to the evacuation chamber 18, and are configured to adjust a flow rate of the operating fluid to be evacuated from the control system 10, 100, 1000, in particular from the calibration chamber 2, so that the concentration value of the radioactive chemical element decreases inside the calibration chamber 2.

Hereinbelow is explained an exemplary method for controlling the diminution of the radioactive chemical element concentration inside the calibration chamber 2, that is, a method for evacuating the radioactive material coming from the calibration chamber 2 into the atmosphere, following a calibration test, by using an evacuation chamber 18 suitable for implementation in the control system 10, 100, 1000 previously described.

Following a calibration test, the operating fluid rich in radioactive chemical element and its decay products is sucked from the calibration chamber 2 by using the pump P3 provided in the evacuation circuit C5. As such, the operating fluid flow coming from the calibration chamber 2 is supplied to the evacuation chamber 18 through the evacuation circuit C5.

The operating fluid is continuously sucked from the calibration chamber 2 and introduced into the evacuation circuit C5, towards the evacuation chamber 18, until a depression is created inside the calibration chamber 2, so as to open the valve element Z adapted to introduce air from the outer environment towards the calibration chamber 2 itself. In this way, the operating fluid rich in radioactive chemical element and its decay products is diluted with air coming from the outer environment, and, at the same time, the amount of operating fluid moving from the calibration chamber 2 to the evacuation chamber 18 is maximized.

Subsequently to the opening of the valve element Z, the connection between the calibration chamber 2 and the evacuation chamber 18 is closed by closing the additional valve element U, thus blocking the operating fluid flow from the calibration chamber 2 to the evacuation chamber 18.

In order to remove the operating fluid possibly remained inside the calibration chamber 2, and yet characterized by a low concentration of radioactive chemical element and its decay products, the calibration chamber 2 is cleaned by using additional air coming from the outer environment. In particular, a high flow-rate flow of air coming from the outer environment is introduced into the calibration chamber 2 from the valve element Z, and then is released into the outer environment by properly setting the discharge switch 17. This air flow entering the calibration chamber 2 is maintained until the calibration chamber 2 has been completely cleaned from the radioactive chemical element and its decay products.

Once cleaned, the calibration chamber 2 can be immediately reused for a subsequent calibration test.

In the meantime, the evacuation chamber 18 turns out to be full of operating fluid rich in radioactive chemical element and its decay products, which has to be disposed of into the atmosphere once the radioactive material concentration will have decreased below the limits imposed by the law as stated above.

In order to decrease the radioactive material concentration inside the evacuation chamber 18, the operating fluid contained therein can be diluted with air coming from the outer environment. In particular, the pump P4 is used to draw, at low flow-rate, an operating fluid flow having a high concentration of radioactive material from the evacuation chamber 18. Inside the further conduit means 300000, this operating fluid coming from the evacuation chamber 18 is mixed with air drawn from the outside through the pump P5. The operating fluid thus diluted reaches a radioactive material concentration lower than 1000 Bq/m³ and can then be disposed of into the atmosphere.

The time scale for the disposal of the operating fluid rich in radioactive chemical element and its decay products into the atmosphere according to the evacuation method described is of the order of several hours. As a result, prior to the termination of the new calibration test being executed inside the calibration chamber, the evacuation chamber 18 will turn out to be ready for receiving an additional operating fluid flow having a high concentration of radioactive chemical element and its decay products, to be disposed of.

## Claims

1. Control system (10; 100; 1000) arranged for controlling a diminution of concentration of a radioactive chemical element, like radon, during or at the end of a calibration test of a measuring device (8) for measuring a concentration of said radioactive chemical element, said control system (10; 100; 1000) comprising:
- a calibration chamber (2) arranged for housing said measuring device (8) to be calibrated, said calibration chamber (2) being provided with at least one evacuation passage (23) for the passage of an operating fluid comprising said radioactive chemical element to be disposed of exiting said calibration chamber (2);
- a pump (P3) arranged for generating and controlling a flow of said operating fluid exiting said calibration chamber (2);
- an evacuation chamber (18) arranged outside, and being in fluid connection with, said calibration chamber (2) for receiving said flow of operating fluid exiting said calibration chamber (2), said control system (10; 100; 1000) further comprising flow adjusting means (17, U) arranged for adjusting a flowrate of said operating fluid exiting said calibration chamber (2) and entering said evacuation chamber (18), said flow adjusting means (17, U) being interposed between said evacuation chamber (18) and said calibration chamber (2) along a path of said operating fluid from said calibration chamber (2) to said evacuation chamber (18) and being arranged for adjusting a flowrate of said operating fluid entering said evacuation chamber (18) and coming from said calibration chamber (2) so that inside said calibration chamber (2) a concentration value of said radioactive chemical element diminishes;
- conduit means (30000, 300000) for circulating said operating fluid entering and/or exiting from said evacuation chamber (18);
said control system (10; 100; 1000) being **characterized in that** it further comprises a discharge circuit (C6) configured to release said operating fluid flow from said evacuation chamber (18) to the outer environment, said discharge circuit (C6) comprising further conduit means (300000) for the circulation of said operating fluid towards the environment outside the evacuation chamber (18), and two pumps (P4, P5), respectively for generating and controlling an operating fluid flow coming from said evacuation chamber (18), to be disposed of into the atmosphere, and for generating and controlling an air flow coming from the outer environment, which is added to said operating fluid flow coming from said evacuation chamber (18) so as to dilute the concentration of the radioactive material of said operating fluid flow coming from said evacuation chamber (18).

2. Control system (10; 100; 1000) according to claim 1, wherein said evacuation chamber (18) comprises an expandible part (21) arranged for enabling the internal volume of said evacuation chamber (18) to be varied in function of said operating fluid to be disposed of that is provided to said evacuation chamber (18).

3. Control system (10; 100; 1000) according to claim 2, wherein said expandible part (21) comprises a bellows-like sidewall portion (22) comprising folds of walls that enable the internal volume of said evacuation chamber (18) to be deformed.

4. Control system (10; 100; 1000) according to one of the preceding claims, and further comprising an evacuation circuit (C5) to place said evacuation chamber (18) in fluid connection with said calibration chamber (2), said evacuation circuit (C5) comprising said pump (P3) and said conduit means (30000) that defines a path for said operating fluid from said calibration chamber (2) to said evacuation chamber (18), an end of said conduit means (30000) being fitted to said evacuation passage (23) and a further end of said conduit means (30000) being fitted to an inlet hole (24) obtained on a wall of said evacuation chamber (18) to enable said operating fluid flow coming from said calibration chamber (2) to enter said evacuation chamber (18).

5. Control system (10; 100; 1000) according to claim 4, wherein said flow adjusting means (17, U) comprises an evacuation switch (17) arranged in said evacuation circuit (C5) and that enables said operating fluid flow coming from said calibration chamber (2) to flow to said evacuation chamber (18) along an evacuation direction (M) or to the outer environment along an exit direction (N) and a valve element (U) arranged for adjusting said flowrate of operating fluid exiting said calibration chamber (2) to said evacuation chamber (18).

6. Control system (10; 100; 1000) according to one of the preceding claims, and further comprising a valve element (Z) configured for adjusting a flowrate of air entering from the outer environment to said calibration chamber (2), this air flowing along an inlet direction (I) through a conduit (3000000) an end of which is fitted to a passage for clean air (26) obtained on a wall of said calibration chamber (2).

7. Control system (10; 100; 1000) according to one of the preceding claims, and further comprising:
- a source (S) of said radioactive chemical element arranged outside of said calibration chamber (2), said calibration chamber (2) being provided with at least one inlet passage (12; 12, 120) and at least one outlet passage (14; 14, 140) for the passage of an operating fluid, respectively entering and exiting from said calibration chamber (2);
- a pump (P; P1) for generating and controlling an operating fluid flow incident on said source (S) and obtaining an operating fluid flow exiting from said source (S), formed by said incident operating fluid flow and by decay products of said radioactive chemical element dragged by said incident operating fluid flow;
- adjusting means (MFC1, MFC2, V; V1, V2, 15, 16; 15, 16, 150, 160) for adjusting a flow-rate of said calibration operating fluid entering and/or exiting from said calibration chamber (2); and
- a collecting chamber (1) arranged for collecting internally said radioactive chemical element, said collecting chamber (1) being arranged outside said calibration chamber (2) and being in fluid connection with said source (S) of said radioactive chemical element through conduit means (3; 30; 3, 30, 300; 3, 30, 300, 3000) for receiving said operating fluid flow exiting said source (S) so as to increase a concentration of said radioactive chemical element within it and with said calibration chamber (2) for supplying said calibration chamber (2) with said operating fluid flow comprising said radioactive chemical element so as to increase a concentration of said radioactive chemical product inside said calibration chamber (2), said flow adjusting means (MFC1, MFC2, V; V1, V2, 15, 16; 15, 16, 150, 160) being interposed between said collecting chamber (1) and said calibration chamber (2) along a path of said operating fluid from said collecting chamber (1) to said calibration chamber (2) and adjusting a flowrate of said operating fluid entering said calibration chamber (2) and coming from said collecting chamber (1) so that inside said calibration chamber (2) is obtained a set concentration value of said radioactive chemical element variable during said calibration test.

8. Control system (10; 100; 1000) according to claim 7, and further comprising a collecting circuit (C1) arranged for collecting said radioactive chemical element inside said collecting chamber (1), said collecting circuit (C1) comprising first conduit means (3) of said conduit means (3, 30; 3, 30, 300; 3, 30, 300, 3000) defining a path for said operating fluid flowing in said collecting circuit (C1) along a collecting direction (D), said pump (P; P1) and said source (S) being fitted along said path of said operating fluid, said first conduit means (3) comprising an end portion fitted to an inlet opening (5) of said collecting chamber (1) for the passage of said operating fluid entering said collecting chamber (1), and an additional end portion fitted to an outlet opening (7) for the passage of said operating fluid exiting from said collecting chamber (1).

9. Control system (10; 100; 1000) according to claim 8, wherein said collecting circuit (C1) further comprises a first pair of switch devices (15, 16) comprising a first switch device (15) and a second switch device (16) arranged for isolating a portion (190) of said first conduit means (3) comprising said radioactive chemical element source (S) and said pump (PI), and for allowing air free of radioactive chemical element from the outside to enter said portion (190), or air rich in radioactive chemical element to exit from said portion (190) to the outside, to remove said decay products from said portion (190).

10. Control system (10; 100; 1000) according to claim 8 or 9, and further comprising a supply circuit (C2) arranged for placing said collecting chamber (1) in fluid connection with said calibration chamber (2), and comprising second conduit means (30), defining a path for said operating fluid between said collecting chamber (1) and said calibrating chamber (2) to allow said operating fluid coming from said collecting chamber (1) to enter said calibration chamber (2) to vary a radioactive chemical element concentration inside said calibrating chamber (2).

11. Control system (10; 100; 1000) according claim 9 or 10, when claim 10 is appended to claim 9, and further comprising a compensation circuit (C3), arranged for connecting said calibration chamber (2) with said portion (190), said compensation circuit (3) comprising third conduit means (300) that defines a path for said operating fluid and is configured to allow said operating fluid to enter and/or exit from said calibration chamber (2), and to enter and/or exit from said portion (190) of said first conduit means (3), said compensation circuit (C3) being designed for compensating the concentration of said radioactive chemical element naturally decayed inside said calibration chamber (2).

12. Control system (10; 100; 1000) according to one of claims from 7 to 11, and futher comprising an increment circuit (C4) arranged for generating and circulating, through fourth conduit means 3000, said operating fluid entering and exiting from said calibration chamber (2) to increase said concentration of said radioactive chemical element inside said calibration chamber (2).

13. Control system (10; 100; 1000) according to claim 12, wherein said portion (190) is shared by said collecting circuit (C1), said compensation circuit (C3) and said increment circuit (C4).

14. Control method for controlling a decrease of concentration of a radioactive chemical element, like radon, during or at the end of a calibration test of a measuring device (8) of said radioactive chemical element, said control method being implementable in a control system (10; 100; 1000) according to any one of the preceding claims and comprising the steps of:
- providing a calibration chamber (2) arranged for housing said measuring device (8) to be calibrated, said calibration chamber (2) being provided with at least one evacuation passage (23) for the passage of an operating fluid comprising said radioactive chemical element to be disposed of exiting said calibration chamber (2);
- driving a pump (P3) for generating and controlling said flow of operating fluid exiting said calibration chamber (2) through conduit means (30000, 300000) of said control system (10; 100; 1000);
- sucking said operating fluid that is rich in said radioactive chemical element from said calibration chamber (2) by using said pump (P3) and supplying said operating fluid flow to an evacuation chamber (18) of said control system (10; 100; 1000) to decrease a concentration of said radioactive chemical element inside said calibration chamber (2);
- adjusting, by flow adjusting means (17, U), a flow-rate of said operating fluid exiting said calibration chamber (2) and entering said evacuation chamber (18), said flow adjusting means (17, U) being interposed between said evacuation chamber (18) and said calibration chamber (2) along a path of said operating fluid from said calibration chamber (2) to said evacuation chamber (18) and adjusting a flow-rate of said operating fluid entering said evacuation chamber (18) and coming from said calibration chamber (2) so that inside said calibration chamber (2) a concentration value of said radioactive chemical element diminishes;
said control method being **characterized by** further comprising the steps of:
- driving a first pump (P4) of a discharge circuit (C6) designed to draw an operating fluid flow of radioactive material from said evacuation chamber (18); and
- driving a second pump (P5) of said discharge circuit (C6) to draw air from outside said control system (10; 100; 1000), said operating fluid coming from said evacuation chamber (18) and said air drawn through said second pump (P5) being mixed before being disposed of into the atmosphere in order to dilute the radioactive material concentration of said operating fluid flow coming from said evacuation chamber (18).

15. Control method according to claim 14, wherein said sucking and said supplying continue until a depression is created inside said calibration chamber (2) so as to open a valve element (Z) suitable to make air enter from the outer environment to said calibration chamber (2).

16. Control method according to claim 15, and further comprising, after creating said depression, closing a connection between said calibration chamber (2) and said evacuation chamber (18) by closing a further valve element (U), thus blocking said flow of operating fluid from said calibration chamber (2) to said evacuation chamber (18).

17. Control system (10; 100; 1000) arranged for controlling a concentration variation of a radioactive chemical element, like radon, during or at the end of a calibration test of a measuring device (8) for measuring a concentration of said radioactive chemical element, said control system (10; 100; 1000) comprising:
- a calibration chamber (2) arranged for housing said measuring device (8) to be of calibrated, said calibration chamber (2) being provided with at least one inlet passage (12; 12, 120) and at least one outlet passage (14; 14, 140) for the passage of an operating fluid, respectively entering, and exiting from, said calibration chamber (2);
- a source (8) of said radioactive chemical element, said source being arranged outside said calibration chamber (2);
- a pump (P; P1) arranged for generating and controlling a flow of said operating fluid flow incident on said source (S) and obtaining an operating fluid flow exiting from said source (S), formed by said incident operating fluid flow and by decay products of the radioactive chemical element dragged by said incident operating fluid flow;
- conduit means (3, 30; 3, 30, 300; 3, 30, 300, 3000) for circulating said operating fluid;
- flow adjusting means (MFC1, MFC2, V; V1, V2, 15, 16; 15, 16, 150, 160) arranged for adjusting a flow-rate of said calibration operating fluid enetring and/or exiting from said calibration chamber (2);
said control system (10; 100; 1000) being **characterized by** further comprising a collecting chamber (1) arranged for collecting internally said radioactive chemical element, said collecting chamber (1) being arranged outside said calibration chamber (2) and being in fluid connection with said source (S) of said radioactive chemical element to receive said operating fluid flow exiting from said source (S) in order to increase a concentration of said radioactive chemical element inside of it and with said calibration chamber (2) to supply said calibration chamber (2) with said operating fluid flow, which comprises said radioactive chemical element, so as to increase a concentration of said radioactive chemical element within said calibration chamber (2), said flow adjusting means (MFC1, MFC2, V; V1, V2, 15, 16; 15, 16, 150, 160) being interposed between said collecting chamber (1) and said calibration chamber (2) along a path of said operating fluid from said collecting chamber (1) to said calibration chamber (2) and adjusting a flow-rate of said operating fluid entering said calibration chamber (2) and coming from said collecting chamber (1) so that, inside said calibration chamber (2), a pre-set concentration value of said radioactive chemical element, which is variable during said calibration test, is obtained.

18. Control system (10; 100; 1000) according to claim 17, and further comprising a collecting circuit (C1) arranged for collecting said radioactive chemical element inside said collecting chamber (1), said collecting circuit (C1) comprising first conduit means (3) of said conduit means (3, 30; 3, 30, 300; 3, 30, 300, 3000) which defines a path for said operating fluid flowing in said collecting circuit (C1) along a collecting direction (D), said pump (P; P1) and said source (S) being fitted along said path of said operating fluid, said first conduit means (3) comprising and end portion fitted to an inlet opening (5) of said collecting chamber (1) for the passage of said operating fluid entering said collecting chamber (1), and an additional end portion fitted to an outlet opening (7) for the passage of said operating fluid exiting from said collecting chamber (1),

19. Control system (10; 100; 1000) according to claim 18, wherein said collecting circuit (C1) further comprises a mass flow controller (MFC1) arranged along said path of said operating fluid in said collecting circuit (C1) for detecting and controlling the flow rate of said operating fluid circulating in said collecting circuit (C1).

20. Control system (10; 100; 1000) according to claim 18 or 19, wherein said collecting circuit (C1) further comprises a first pair of switch devices (15, 16) comprising a first switch device (15) and a second switch device (16) arranged for isolating a portion (190) of said first conduit means (3) comprising said source (S) of radioactive chemical element and said pump (P1) and allowing air free of radioactive chemical element from the outside to enter said portion (190), or air rich in radioactive chemical element to exit from said portion (190) to the outside, to remove said decay products from said portion (190).

21. Control system (10; 100; 1000) according to one of claims from 18 to 20, and further comprising a supply circuit (C2) arranged for placing said collecting chamber (1) in fluid connection with said calibration chamber (2) and comprising second conduit means (30), defining a path for said operating fluid between said collecting chamber (1) and said calibration chamber (2) for allowing said operating fluid, coming from said collecting chamber (1), to enter said calibration chamber (2) in order to vary a concentration of said radioactive chemical element inside said calibration chamber (2).

22. Control system (10; 100; 1000) according to claim 21, wherein said supply circuit (C2) further comprises a second mass flow controller (MFC2) arranged for detecting and controlling the flow rate of operating fluid circulating in said supply circuit (C2), said second mass flow controller (MFC2) being placed upstream of said calibration chamber (2) along the path of said operating fluid from said collecting chamber (1) to said calibration chamber (2).

23. Control system (10; 100; 1000) according to one of claims from 20 to 22, when claim 21 is appended on claim 20, and further comprising a compensation circuit (C3), arranged for connecting said calibration chamber (2) to said portion (190), said compensation circuit (C3) comprising third conduit means (300) which defines a path for said operating fluid and is configured for allowing said operating fluid to enter and exit from said calibration chamber (2), and enter and exit from said portion (190) of said first conduit means (3), said compensation circuit (C3) being configured for compensating the concentration of said radioactive chemical element naturally decayed inside said calibration chamber (2).

24. Control system (10; 100; 1000) according to one of claims from 20 to 23, when claim 21 is appended on claim 20, and further comprising an increment circuit (C4), arranged for generating and circulating, through fourth conduit means (3000), said operating fluid entering and exiting from said calibration chamber (2) to increase said concentration of said radiactive chemical element inside said calibration chamber (2).

25. Control system (10; 100; 1000) according to claim 24, wherein said portion (190) is shared by said collecting circuit (C1), said compensation circuit (C3) and said increment circuit (C4).

26. Control system (10; 100; 1000) according one of claims from 23 to 25, when claim 8 depends on claim 7, and further comprising a plurality of collecting chambers (1), each collecting chamber (1a, 1b, 1c) of said plurality of collecting chambers (1) being arranged for collecting decays products of said radioactive chemical element therein, a first collecting chamber (1a) being arranged along the path of said operating fluid in said collecting circuit (C1) and in said supply circuit (C2), a second collecting chamber (1b) being arranged along the path of said operating fluid in said compensation circuit (C3) and a third collecting chamber (1c) being arranged along the path of said operating fluid in said increment circuit (C4).

27. Control system (10; 100; 1000) according one of claims from 24 to 26, when claims 9 and 10 is appended on claim 8, and further comprising a second pump (P2) arranged for conveying said operating fluid flow rich in decay products of said radioactive chemical element in said calibration chamber (2), said second pump (P2) being fitted on a second connecting portion (1900) of said conduit means (3, 30; 3, 30, 300; 3, 30, 300, 3000), shared by said supply circuit (C2), said compensation circuit (C3) and said increment circuit (C4).

28. Control system (10; 100; 1000) according to claim 26 or 27, and further comprising a second pair of switch devices (150, 160) arranged for allowing said operating fluid flow to enter and/or exit from only one collecting chamber (1a, 1b, 1c) of said plurality of collecting chambers, depending on the step being executed in said control system (1000).

29. Control system (10; 100; 1000) according one of claims from 17 to 28, and further comprising an evacuation chamber (18) placed outside, and being in fluid communication with, said calibration chamber (2) to receive said operating fluid flow exiting from said calibration chamber (2) and flow adjusting means (17, U) arranged for adjusting a flow-rate of said operating fluid exiting from said calibration chamber (2) and entering said evacuation chamber (18), said flow adjusting means (17, U) being interposed between said evacuation chamber (18) and said calibration chamber (2) along a path of said operating fluid from said calibration chamber (2) to said evacuation chamber (18) and adjusting a flow-rate of said operating fluid entering said evacuation chamber (18) and coming from said calibration chamber (2) so that inside said calibration chamber (2) a concentration value of said radioactive chemical element decreases.

30. Control method for controlling a concentration variation of a radioactive chemical element, like radon, during a calibration test of a measuring device (8) of said radioactive chemical element, said control method being implementable in a control system (10; 100; 1000) according to any one of claims from 17 or 29 and comprising the steps of:
- providing a calibration chamber (2) arranged for housing said measuring device (8) to be calibrated, said calibration chamber (2) being provided with at least one inlet passage (12; 12, 120) and at least one outlet passage (14; 14, 140) for the passage of an operating fluid, repsectively entering and exiting from said calibration chamber (2);
- driving a pump (P; P1) for generating and controlling a flow of the operating fluid incident on a source (S) of said radioactive chemical element arranged outside said calibration chamber (2) and obtaining an operating fluid flow exiting from said source (S) formed by said incident operating fluid flow and decay products of said radioactive chemical element dragged by said incident operating fluid flow;
said control method being **characterized by** further comprising the steps of:
- collecting decay products of said radioactive chemical element inside a collecting chamber (1) of said control system (10; 100; 1000), said collecting comprising supplying said operating fluid flow exiting from said source (S) to said collecting chamber (1) in order to collect decay products of said radioactive chemical element inside said collecting chamber (1) until a desired concentration of said radioactive chemical element is reached inside said collecting chamber (1);
- supplying said calibration chamber (2) with said operating fluid flow coming from said collecting chamber (1), said supplying comprising providing an initial collecting step of said radioactive chemical element inside said calibration chamber (2) until a radioactive chemical element concentration value required prior to the start of said calibration test is reached inside said calibration chamber (2);
- adjusting, through flow adjusting means (MFC1, MFC2, V; V1, V2, 15, 16; 15, 16, 150, 160) interposed between said collecting chamber (1) and said calibration chamber (2) along a path of said calibration operating fluid from said collecting chamber (1) to said calibration chamber (2), a flow-rate of said operating fluid entering said calibration chamber (2) and coming from said collecting chamber (1) so that a pre-set concentration value of said radioactive chemical element, which is variable during said calibration test, is reached inside said calibration chamber (2).

31. Control method according to claim 30, wherein said collecting comprises driving said flow adjusting means (MFC1, MFC2, V; V1, V2, 15, 16; 15, 16, 150, 160) so as said operating fluid circulates only in a collecting circuit (C1) of said control system (10; 100; 1000) and in said collecting chamber (1) in order to increase said radioactive chemical element concentration inside said collecting chamber (1) until said desired concentration of said radioactive chemical element is reached inside said collecting chamber (1).

32. Control method according to claim 31, wherein said supplying said calibration chamber (2) comprises, after said desired concentration of said radioactive chemical element has been reached inside said collecting chamber (1), driving said flow adjusting means (MFC1, MFC2, V; V1, V2, 15, 16; 15, 16, 150, 160) so as said operating fluid circulates in a supply circuit (C2) of said control system (10; 100; 1000) and in said calibration chamber (2) in order to increase said radioactive chemical element concentration inside said calibration chamber (2) until said desired concentration of said radioactive chemical elementi is reached inside said calibration chamber (2).

33. Control method according to claim 32, wherein said supplying said calibration chamber (2) with said operating fluid flow coming from said collecting chamber (1) further comprises, after said desired concentration of said radioactive chemical element is reached in said calibration chamber (2), driving said flow adjusting means (MFC1, MFC2, V; V1, V2, 15, 16; 15, 16, 150, 160) so as said calibration chamber (2) is isolated from the remaining parts of said control system (10; 100; 1000) in order to start said calibration test.

34. Control method according to claim 33, wherein said supplying said calibration chamber (2) with said operating fluid flow coming from said collecting chamber (1) further comprises, after having started a calibration test, continuing to supply said operating fluid flow to said calibration chamber (2) to increase or compensate said concentration of said radioactive chemical element inside said calibration chamber (2).

35. Control method according to one of claims from 30 to 34, and further comprising a cleaning step of the internal volumes of said pump (PI), of said source (S) of radioactive chemical element, and of a connecting portion (190) of first conduit means (3) of said control system (10; 100; 1000), said cleaning step comprising taking cleaning fluid from the outer environment to said control system (10; 100; 1000) through a first switch device of the control system (15) of said control system (10; 100; 1000), passing said cleaning fluid through said portion (190), expelling said cleaning fluid to the outside by means of said second switch device (16), said cleaning fluid in its path within said portion (190) dragging any emissions from said source (S) of radioactive chemical element.
